(19)

Europäisches
Patentamt

European
Patent Office

Office européen
des brevets

(11) **EP 2 581 579 B1**

(12) **EUROPEAN PATENT SPECIFICATION**

(45) Date of publication and mention
of the grant of the patent:
**22.02.2017 Bulletin 2017/08**

(51) Int Cl.:
*F01N 9/00* *(2006.01)*    *F02D 41/14* *(2006.01)*

(21) Application number: **12187087.7**

(22) Date of filing: **03.10.2012**

(54) **Exhaust gas control system and exhaust gas control method for internal combustion engine**

Abgassteuerungssystem und Abgassteuerungsverfahren für Verbrennungsmotor

Système de commande de gaz d'échappement et procédé de commande de gaz d'échappement pour moteur à combustion interne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2011 JP 2011226621**

(43) Date of publication of application:
**17.04.2013 Bulletin 2013/16**

(73) Proprietor: **TOYOTA JIDOSHA KABUSHIKI KAISHA**
**Toyota-shi, Aichi-ken, 471-8571 (JP)**

(72) Inventor: **AMANO, Naoki**
**Aichi-ken, 471-8571 (JP)**

(74) Representative: **D Young & Co LLP**
**120 Holborn**
**London EC1N 2DY (GB)**

(56) References cited:
**EP-A1- 1 854 971    EP-A1- 2 612 004**
**GB-A- 2 456 060**

**Description**

BACKGROUND OF THE INVENTION

1. Field of the Invention

The invention relates to an exhaust gas control system and exhaust gas control method for an internal combustion engine (mainly, a diesel engine) that includes a filter that traps particulate matter contained in exhaust gas emitted from the internal combustion engine.

2. Description of Related Art

Particulate matter contained in exhaust gas emitted from an internal combustion engine (mainly, a diesel engine) is trapped by a filter, such as a diesel particulate filter (DPF). In addition, in a related art, there is known a technique for calculating the amount of deposition of particulate matter deposited on the filter on the basis of a filter differential pressure that is a differential pressure obtained by subtracting a pressure downstream of the filter from a pressure upstream of the filter.

For example, there is disclosed an exhaust gas control system for an engine (see Japanese Patent Application Publication No. 2004-197722 (JP 2004-197722 A)). In the exhaust gas control system, a first particulate matter deposition amount is estimated on the basis of a filter differential pressure, a second particulate matter deposition amount is estimated by accumulating the amount of particulate matter emission, and a larger one of the first particulate matter deposition amount and the second particulate matter deposition amount is selected as a finally estimated particulate matter deposition amount. With this exhaust gas control system, it is possible to further accurately determine the timing at which the filter should be recovered and to protect the filter.

However, in the exhaust gas control system described in JP 2004-197722 A, when water condensed in an exhaust passage is absorbed by the filter, such as the DPF, a pressure loss in the filter increases, and the filter differential pressure increases, so a particulate matter deposition amount may result in an excessive value. Particularly, when a start and stop of the engine are repeated in an environment in which an outside air temperature is low, the amount of water condensed in the exhaust passage increases, so the above problem is highly likely to become manifest.

In addition, when the particulate matter deposition amount is obtained as an excessive value as described above, it may be erroneously determined that "because the amount of particulate matter deposited on the filter is excessive, the temperature in the filter may exceed the heatproof temperature of a filter base material when the deposited particulate matter is burned" and it may be erroneously determined that the amount of deposition of particulate matter is abnormal (so-called "excessive deposition").

EP 1 854 971 A1 relates to a method and apparatus for the estimation of the particle filter loading. GB 2 456 060 A relates to filter regeneration.

SUMMARY OF THE INVENTION

The disclosure as defined in the independent claims provides an exhaust gas control system and exhaust gas control method for an internal combustion engine, which are able to prevent erroneous determination, due to absorbed moisture, that the amount of deposition of particulate matter is abnormal (excessive deposition). Further features of the disclosure are defined in the dependent claims.

A teaching of the disclosure provides an exhaust gas control system for an internal combustion engine that includes a filter that traps particulate matter contained in exhaust gas emitted from the internal combustion engine. The exhaust gas control system includes: differential pressure detecting means for detecting a filter differential pressure that is a difference in pressure, obtained by subtracting a pressure downstream of the filter from a pressure upstream of the filter; deposition amount estimating means for estimating an amount of deposition of particulate matter trapped in the filter on the basis of the filter differential pressure; excessive deposition determination means for determining that the amount of deposition of particulate matter trapped in the filter is abnormal when the amount of deposition of particulate matter, estimated by the deposition amount estimating means, is larger than or equal to a preset excessive deposition determination value; vaporization determination means for determining whether moisture absorbed in the filter has vaporized; and prohibiting means for prohibiting the deposition amount estimating means from estimating the amount of deposition of particulate matter when the vaporization determination means determines that moisture absorbed in the filter has not vaporized yet.

With the thus configured exhaust gas control system, a filter differential pressure that is a difference in pressure, obtained by subtracting a pressure downstream of the filter from a pressure upstream of the filter, and an amount of deposition of particulate matter trapped in the filter is estimated on the basis of the detected filter differential pressure. Then, when the estimated amount of deposition of particulate matter is larger than or equal to the preset excessive deposition determination value, it is determined that the amount of deposition of particulate matter trapped in the filter is abnormal. In addition, it is determined whether moisture absorbed in the filter has vaporized, and, when it is determined that moisture absorbed in the filter has not vaporized yet, estimating the amount of deposition of particulate matter on the basis of the filter differential pressure is prohibited, so it is possible to prevent erroneous determination, due to absorbed moisture, that the amount of deposition of particulate matter is abnormal (excessive deposition).

That is, when it is determined that moisture absorbed in the filter has not vaporized yet, estimating the amount of deposition of particulate matter on the basis of the filter differential pressure is prohibited. This avoids a situation that a filter differential pressure is detected to be excessive due to moisture absorbed in the filter and the amount of deposition of particulate matter trapped in the filter is estimated to be excessive on the basis of the excessive filter differential pressure. Thus, it is possible to prevent determination, due to absorbed moisture, that the amount of deposition of particulate matter trapped in the filter is abnormal.

In addition, the exhaust gas control system further includes emission amount accumulation means for calculating an amount of emission of particulate matter from the internal combustion engine and calculating an accumulated amount of emission, obtained by accumulating the calculated amount of emission, wherein, when the prohibiting means prohibits the deposition amount estimating means from estimating the amount of deposition of particulate matter, the excessive deposition determination means may determine whether the amount of deposition of particulate matter trapped in the filter is abnormal on the basis of the accumulated amount of emission, calculated by the emission amount accumulation means.

With the thus configured exhaust gas control system, an amount of emission of particulate matter from the internal combustion engine is calculated, and an accumulated amount of emission is calculated by accumulating the calculated amount of emission. Then, when estimating the amount of deposition of particulate matter on the basis of the filter differential pressure is prohibited, it is determined whether the amount of deposition of particulate matter trapped in the filter is abnormal on the basis of the accumulated amount of emission, so it is possible to determine whether the amount of deposition of particulate matter trapped in the filter is abnormal even when estimating the amount of deposition of particulate matter on the basis of the filter differential pressure is prohibited.

In addition, the exhaust gas control system according to the teaching of the disclosure may further include temperature recognition means for recognizing a temperature of exhaust gas flowing into the filter, wherein the vaporization determination means may determine whether moisture absorbed in the filter has vaporized on the basis of the temperature of exhaust gas, recognized by the temperature recognition means.

Note that "recognizing a temperature of exhaust gas" is a broader-concept expression that encompasses meanings of "detecting a temperature of exhaust gas", "acquiring a temperature of exhaust gas" and "estimating a temperature of exhaust gas" in this specification. In addition, in the specification, "recognizing" is a broader-concept expression that encompasses meanings of "detecting", "acquiring" and "estimating".

With the thus configured exhaust gas control system, a temperature of exhaust gas flowing into the filter is recognized, and it is determined whether moisture absorbed in the filter has vaporized on the basis of the recognized temperature of exhaust gas, so it is possible to accurately determine whether moisture absorbed in the filter has vaporized.

That is, as the temperature of exhaust gas flowing into the filter increases, moisture absorbed in the filter more easily vaporizes, so moisture absorbed in the filter vaporizes in a short period of time. Thus, by determining whether moisture absorbed in the filter has vaporized on the basis of the recognized temperature of exhaust gas, it is possible to accurately determine whether moisture absorbed in the filter has vaporized.

In addition, the exhaust gas control system according to the teaching of the disclosure may further include a temperature sensor that detects a temperature of exhaust gas flowing into the filter, wherein the temperature recognition means may recognize the temperature of exhaust gas flowing into the filter on the basis of the temperature of exhaust gas, detected by the temperature sensor.

With the thus configured exhaust gas control system, a temperature of exhaust gas flowing into the filter is detected by the temperature sensor, and the temperature of exhaust gas flowing into the filter is recognized on the basis of the detected temperature of exhaust gas, so it is possible to accurately recognize the temperature of exhaust gas flowing into the filter.

In addition, the exhaust gas control system according to the teaching of the disclosure may further include period calculation means for calculating a period during which the temperature of exhaust gas, recognized by the temperature recognition means, is higher than or equal to a preset determination temperature, wherein the vaporization determination means may determine that moisture absorbed in the filter has vaporized when the period calculated by the period calculation means is longer than or equal to a preset determination period.

With the thus configured exhaust gas control system, a period during which the recognized temperature of exhaust gas is higher than or equal to a preset determination temperature is calculated, and, when the calculated period is longer than or equal to the present determination period, it is determined that moisture absorbed in the filter has vaporized, so it is possible to further accurately determine whether moisture absorbed in the filter has vaporized.

In addition, the exhaust gas control system according to the teaching of the disclosure may further include flow rate recognition means for recognizing a flow rate of exhaust gas flowing into the filter, wherein the vaporization determination means may determine whether moisture absorbed in the filter has vaporized on the basis of the flow rate of exhaust gas, recognized by the flow rate recognition means.

With the thus configured exhaust gas control system, a flow rate of exhaust gas flowing into the filter is recognized, and it is determined whether moisture absorbed in the filter has vaporized on the basis of the recognized flow rate of exhaust gas, so it is possible to accurately determine whether moisture absorbed in the filter has vaporized.

That is, as the flow rate of exhaust gas flowing into the filter increases, moisture absorbed in the filter more easily vaporizes, so moisture absorbed in the filter vaporizes in a short period of time. Thus, by determining whether moisture absorbed in the filter has vaporized on the basis of the recognized flow rate of exhaust gas, it is possible to accurately determine whether moisture absorbed in the filter has vaporized.

In addition, the exhaust gas control system according to the teaching of the disclosure may further include a flow rate sensor that detects a flow rate of exhaust gas flowing into the filter, wherein the flow rate recognition means may recognize the flow rate of exhaust gas flowing into the filter on the basis of the flow rate of exhaust gas, detected by the flow rate sensor.

With the thus configured exhaust gas control system, a flow rate of exhaust gas flowing into the filter is detected by the flow rate sensor, and the flow rate of exhaust gas flowing into the filter is recognized by the detected flow rate of exhaust gas, so it is possible to accurately recognize the flow rate of exhaust gas flowing into the filter.

In addition, the exhaust gas control system according to the teaching of the disclosure may further include period calculation means for calculating a period during which the flow rate of exhaust gas, recognized by the flow rate recognition means, is higher than or equal to a preset determination flow rate, wherein the vaporization determination means may determine that moisture absorbed in the filter has vaporized when the period calculated by the period calculation means is longer than or equal to a preset determination period.

With the thus configured exhaust gas control system, a period during which the recognized flow rate of exhaust gas is higher than or equal to the preset determination flow rate is calculated and, when the calculated period is longer than or equal to the preset determination period, it is determined that moisture absorbed in the filter has vaporized, so it is possible to further accurately determine whether moisture absorbed in the filter has vaporized.

In addition, the exhaust gas control system according to the teaching of the disclosure may further include: temperature recognition means for recognizing a temperature of exhaust gas flowing into the filter; and flow rate recognition means for recognizing a flow rate of exhaust gas flowing into the filter, wherein the vaporization determination means may determine whether moisture absorbed in the filter has vaporized on the basis of the temperature of exhaust gas, recognized by the temperature recognition means, and the flow rate of exhaust gas, recognized by the flow rate recognition means.

With the thus configured exhaust gas control system, a temperature of exhaust gas flowing into the filter is recognized, and a flow rate of exhaust gas flowing into the filter is recognized. Then, it is determined whether moisture absorbed in the filter has vaporized on the basis of the recognized temperature of exhaust gas and the recognized flow rate of exhaust gas, so it is possible to accurately determine whether moisture absorbed in the filter has vaporized.

That is, as the temperature of exhaust gas flowing into the filter increases, moisture absorbed in the filter more easily vaporizes, so moisture absorbed in the filter vaporizes in a short period of time. In addition, as the flow rate of exhaust gas flowing into the filter increases, moisture absorbed in the filter more easily vaporizes, so moisture absorbed in the filter vaporizes in a short period of time. Then, by determining whether moisture absorbed in the filter has vaporized on the basis of the recognized temperature of exhaust gas and the recognized flow rate of exhaust gas, it is possible to accurately determine whether moisture absorbed in the filter has vaporized.

In addition, the exhaust gas control system according to the teaching of the disclosure may further include period setting means for setting a determination period that is a period by which it is determined whether moisture absorbed in the filter has vaporized on the basis of the temperature of exhaust gas, recognized by the temperature recognition means, and the flow rate of exhaust gas, recognized by the flow rate recognition means, wherein the vaporization determination means may determine that moisture absorbed in the filter has vaporized when the determination period set by the period setting means has elapsed.

With the thus configured exhaust gas control system, a determination period that is a period by which it is determined whether moisture absorbed in the filter has vaporized is set on the basis of the recognized temperature of exhaust gas and the recognized flow rate of exhaust gas. Then, when the set determination period has elapsed, it is determined that moisture absorbed in the filter has vaporized, so it is possible to further accurately determine whether moisture absorbed in the filter has vaporized.

Another teaching of the disclosure provides an exhaust gas control method for an internal combustion engine that includes a filter that traps particulate matter contained in exhaust gas emitted from the internal combustion engine. The exhaust gas control method includes: a differential pressure detecting step of detecting a filter differential pressure that is a difference in pressure, obtained by subtracting a pressure downstream of the filter from a pressure upstream of the filter; a deposition amount estimating step of estimating an amount of deposition of particulate matter trapped in the filter on the basis of the filter differential pressure; an excessive deposition determination step of determining that the amount of deposition of particulate matter trapped in the filter is abnormal when the amount of deposition of particulate matter, estimated in the deposition amount esti-

7      **EP 2 581 579 B1**      8

mating step, is larger than or equal to a preset excessive deposition determination value; a vaporization determination step of determining whether moisture absorbed in the filter has vaporized; and a prohibiting step of prohibiting the deposition amount estimating step from estimating the amount of deposition of particulate matter when it is determined in the vaporization determination step that moisture absorbed in the filter has not vaporized yet.

With the exhaust gas control system and exhaust gas control method according to the teachings of the disclosure, a filter differential pressure that is a difference in pressure, obtained by subtracting a pressure downstream of the filter from a pressure upstream of the filter, and an amount of deposition of particulate matter trapped in the filter is estimated on the basis of the detected filter differential pressure. Then, when the estimated amount of deposition of particulate matter is larger than or equal to the preset excessive deposition determination value, it is determined that the amount of deposition of particulate matter trapped in the filter is abnormal. In addition, it is determined whether moisture absorbed in the filter has vaporized, and, when it is determined that moisture absorbed in the filter has not vaporized yet, estimating the amount of deposition of particulate matter on the basis of the filter differential pressure is prohibited, so it is possible to prevent erroneous determination, due to absorbed moisture, that the amount of deposition of particulate matter is abnormal.

Teachings of the invention are defined in the appended claims.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a configuration diagram that shows an example of the schematic configuration of a diesel engine and its supply and exhaust system according to an embodiment of the invention;

FIG. 2 is a configuration diagram that shows an example of a control system, such as an ECU, according to the embodiment of the invention;

FIG. 3 is a functional configuration diagram that shows an example (first embodiment) of the configuration of a main portion of an exhaust gas control system for an internal combustion engine according to the aspect of the invention;

FIG. 4A is a graph that shows an example of a temporal variation in exhaust gas temperature after a start of the engine;

FIG. 4B is a graph that shows an example of a temporal variation in exhaust gas flow rate after a start of the engine;

FIG. 5 shows graphs that show examples of temporal variations in filter differential pressure after a start of the engine;

FIG. 6 is a flowchart that shows an example of operations of the ECU according to the first embodiment of the invention, shown in FIG. 3;

FIG. 7 is a functional configuration diagram that shows another example (second embodiment) of the configuration of the main portion of the exhaust gas control system for an internal combustion engine according to the aspect of the invention;

FIG. 8 is a flowchart that shows an example of operations of an ECU according to the second embodiment of the invention, shown in FIG. 7;

FIG. 9 is a functional configuration diagram that shows further another example (third embodiment) of the configuration of the main portion of the exhaust gas control system for an internal combustion engine according to the aspect of the invention; and

FIG. 10 is a flowchart that shows an example of operations of an ECU according to the third embodiment of the invention, shown in FIG. 9.

DETAILED DESCRIPTION OF EMBODIMENTS

Hereinafter, embodiments of the exhaust gas control system for an internal combustion engine according to the aspect of the invention will be described with reference to the accompanying drawings.

Engine

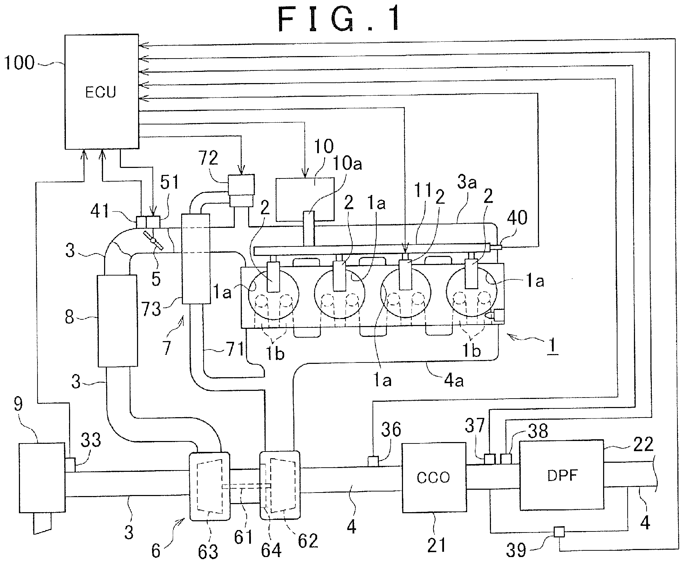

First, the schematic configuration of a diesel engine to which the exhaust gas control system for an internal combustion engine according to the aspect of the invention is applied will be described with reference to FIG. 1. FIG. 1 is a configuration diagram that shows an example of the schematic configuration of a diesel engine 1 and its supply and exhaust system according to an embodiment of the invention.

The diesel engine 1 (hereinafter, referred to as "engine 1 ") is, for example, a common-rail direct-injection four-cylinder engine. An injector (fuel injection valve) 2 is arranged in each of combustion chambers 1a of cylinders of the engine 1. Each injector 2 injects fuel subjected to combustion in the corresponding combustion chamber 1a. The adding injector 2 of each cylinder is connected to a common rail 11. In addition, a supply pump 10 is connected to the common rail 11.

The supply pump 10 draws fuel from a fuel tank, pressurizes the drawn fuel to a high pressure, and supplies the high-pressure fuel to the common rail 11 via a fuel passage 10a. The common rail 11 serves as an accumulator that keeps (accumulates) the high-pressure fuel, supplied from the supply pump 10, at a predetermined pressure, and distributes the accumulated fuel to the adding injectors 2. Each adding injector 2 is an electromagnetically-driven on-off valve that, when a prede-

5

termined voltage is applied, opens to inject and supply fuel into a corresponding one of the combustion chambers 1a. The open/closed states (fuel injection amount and injection timing) of each adding injector 2 undergo duty control executed by the ECU 100.

In addition, an intake passage 3 and an exhaust passage 4 are connected to the engine 1. In the intake passage 3, an air cleaner 9, an air flow meter 33, a compressor impeller 63 of a turbocharger 6, an intercooler 8 and a throttle valve 5 are arranged in the stated order from the upstream side of flow of intake air to the downstream side thereof.

The throttle valve 5 is a valve that adjusts an intake air flow rate. A throttle opening degree that is an opening degree of the throttle valve 5 is adjusted by a throttle motor 51. In addition, the throttle opening degree of the throttle valve 5 is detected by a throttle opening degree sensor 41. Note that the intake passage 3 is branched at an intake manifold 3a in correspondence with the cylinders. The intake manifold 3a is arranged downstream of the throttle valve 5.

The exhaust passage 4 is configured to be collected from a state, branched into the cylinders, into one at an exhaust manifold 4a. The exhaust manifold 4a is connected to the combustion chambers 1a of the cylinders of the engine 1. A CCO 21 and a DPF 22 are arranged in the exhaust passage 4 in the stated order from the upstream side of flow of exhaust gas toward the downstream side thereof. Exhaust gas produced through combustion of fuel in the combustion chambers 1a is fed to the CCO 21 and the DPF 22.

The catalytic converter oxidation (CCO) 21 oxidizes and purifies HC (hydrocarbons) and CO (carbon monoxide) contains in exhaust gas. The DPF 22 is a filter that traps particulate matter (hereinafter, referred to as "PM"). Note that the DPF 22 corresponds to a "filter" according to the aspect of the invention.

A first exhaust temperature sensor 36 is arranged in the exhaust passage 4 at a portion upstream of the CCO 21 (upstream side of flow of exhaust gas). The first exhaust temperature sensor 36 detects the temperature of exhaust gas flowing into the CCO 21. In addition, a second exhaust temperature sensor 37 and an exhaust flow rate sensor 38 are arranged in the exhaust passage 4 between the CCO 21 and the DPF 22. The second exhaust temperature sensor 37 detects the temperature of exhaust gas flowing into the DPF 22. The exhaust flow rate sensor 38 detects the flow rate of exhaust gas flowing into the DPF 22. In addition, a differential pressure sensor 39 is arranged so as to detect a differential pressure between a pressure upstream of the DPF 22 and a pressure downstream of the DPF 22.

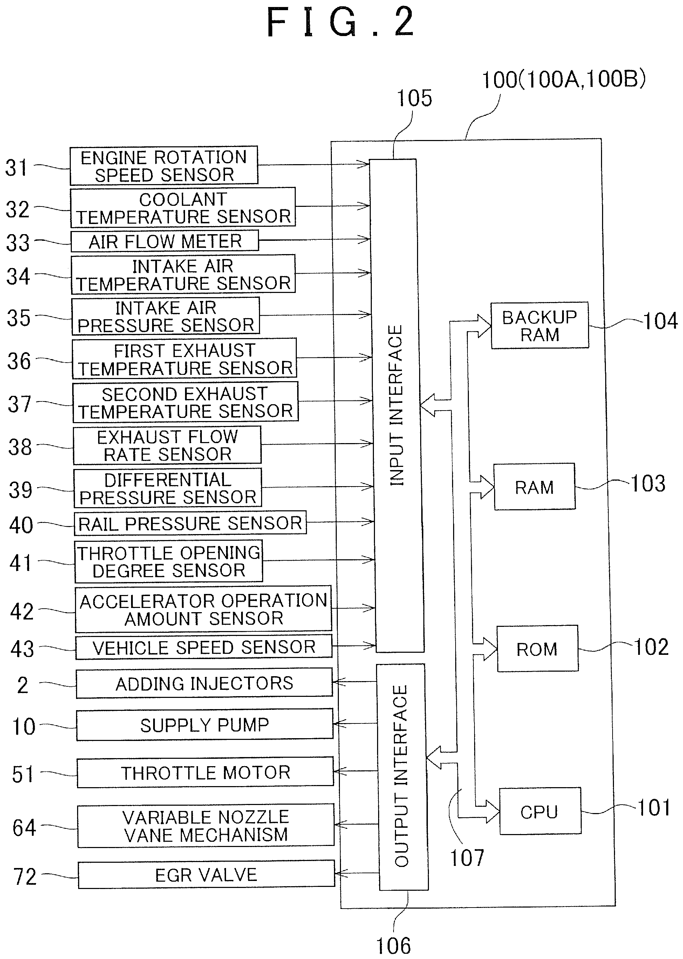

Output signals of the first exhaust temperature sensor 36, the second exhaust temperature sensor 37, the exhaust flow rate sensor 38 and the differential pressure sensor 39 are input to an ECU 100 (100A, 100B) (see FIG. 2). Note that the second exhaust temperature sensor 37 corresponds to a "temperature sensor" according to the aspect of the invention. In addition, the exhaust flow rate sensor 38 corresponds to a "flow rate sensor" according to the aspect of the invention.

In addition, the turbocharger 6 is arranged for the engine 1. The turbocharger 6 includes a turbine wheel 62 and the compressor impeller 63 that are coupled via a rotor shaft 61. The compressor impeller 63 is provided in the intake passage 3. The turbine wheel 62 is provided in the exhaust passage 4. In addition, the turbocharger 6 utilizes exhaust flow (exhaust pressure) received by the turbine wheel 62 to rotate the compressor impeller 63 to thereby supercharge intake air. The turbocharger 6 is, for example, a variable nozzle turbocharger in which a variable nozzle vane mechanism 64 is provided adjacent to the turbine wheel 62 and it is possible to adjust the supercharging pressure of the engine 1 by adjusting the opening degree of the variable nozzle vane mechanism 64. Note that intake air increased in temperature through supercharging of the turbocharger 6 is forcibly cooled by the intercooler 8 arranged in the intake passage 3.

In addition, an EGR device 7 is arranged at the engine 1. The EGR device 7 returns part of exhaust gas, flowing through the exhaust passage 4, to the intake passage 3, and supplies the exhaust gas to the combustion chambers 1a of the cylinders again to decrease combustion temperature. By so doing, the amount of generated NOx is reduced. The EGR device 7 includes an EGR passage 71 that connects the intake manifold 3a to the exhaust manifold 4a. An EGR cooler 73 and an EGR valve 72 are arranged in the EGR passage 71 in the stated order from the upstream side of flow of EGR gas toward the downstream side thereof. The EGR cooler 73 cools EGR gas that passes (returns) through the EGR passage 71. The EGR valve 72 adjusts the amount of EGR gas (the amount of returned exhaust gas) introduced from the exhaust passage 4 (exhaust manifold 4a) into the intake passage 3 (intake manifold 3a).

ECU

Next, the configuration of the ECU 100 (100A, 100B) will be described with reference to FIG. 2. FIG. 2 is a configuration diagram that shows an example of a control system, such as the ECU, according to the embodiment of the invention. As shown in FIG. 2, the electronic control unit (ECU) 100 (100A, 100B) includes a CPU 101, a ROM 102, a RAM 103 and a backup RAM 104.

The read only memory (ROM) 102 is a nonvolatile memory that stores various control programs, and look-up tables (LUT), maps, and the like, that are consulted at the time of executing the various control programs. The central processing unit (CPU) 101 executes computation processing on the basis of the various control programs, the look-up tables, the maps, and the like, stored in the ROM 102. In addition, the random access memory (RAM) 103 temporarily stores computation results of the CPU 101, data input from the sensors, and the like. The backup RAM 104 is a nonvolatile memory that stores, for example, data to be saved at the time of a stop of the engine 1 or at the time of turning off the ignition.

The CPU 101, the ROM 102, the RAM 103 and the backup RAM 104 are connected to one another via a bus 107, and are connected to an input interface 105 and an output interface 106.

The input interface 105 executes processing, such as A/D conversion, over detected signals from the sensors and converts the detected signals to detected information processable by the CPU 101. An engine rotation speed sensor 31, a coolant temperature sensor 32, an air flow meter 33, an intake air temperature sensor 34, an intake air pressure sensor 35, the first exhaust temperature sensor 36, the second exhaust temperature sensor 37, the exhaust flow rate sensor 38, the differential pressure sensor 39, a rail pressure sensor 40, the throttle opening degree sensor 41, an accelerator operation amount sensor 42, a vehicle speed sensor 43, and the like, are communicably connected to the input interface 105.

The engine rotation speed sensor 31 detects the rotation speed of a crankshaft that is an output shaft of the engine 1. The coolant temperature sensor 32 detects an engine coolant temperature (coolant temperature). The air flow meter 33 detects an intake air flow rate. The intake air temperature sensor 34 is arranged in the intake manifold 3a, and detects the temperature of intake air. The intake air pressure sensor 35 detects the pressure of intake air. The rail pressure sensor 40 detects the pressure of high-pressure fuel in the common rail 11.

The output interface 106 executes processing, such as D/A conversion, over information, such as command information, output from the CPU 101, and converts the information to command signals, and the like, receivable by the units (or devices). The adding injectors 2, the supply pump 10, the throttle motor 51 of the throttle valve 5, the variable nozzle vane mechanism 64 of the turbocharger 6, the EGR valve 72, and the like, are communicably connected to the output interface 106.

The ECU 100 (100A, 100B) executes various controls over the engine 1 on the basis of output signals from the various sensors. The various controls over the engine 1 include control over the opening degree of the throttle valve 5 of the engine 1, fuel injection amount control, fuel injection timing control (open/close control over the adding injectors 2), and the like. In addition, the ECU 100 (100A, 100B) carries out a fault diagnosis of exhaust devices (the exhaust flow rate sensor 38, the differential pressure sensor 39, and the like).

Functional Configuration of ECU (First Embodiment)

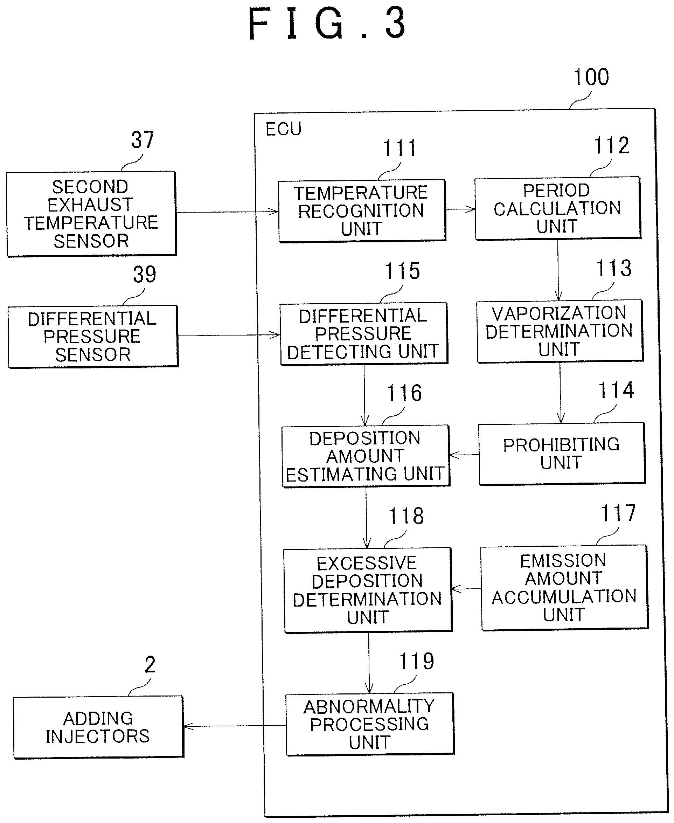

Next, the configuration of a main portion of the exhaust gas control system for an internal combustion engine according to the aspect of the invention will be described with reference to FIG. 3. FIG. 3 is a functional configuration diagram that shows an example (first embodiment) of the configuration of the main portion of the exhaust gas control system for an internal combustion engine according to the aspect of the invention.

As shown in FIG. 3, when the CPU 101 loads the control programs stored in the ROM 102, or the like, and executes the control programs, the ECU 100 functions as functional units, such as a temperature recognition unit 111, a period calculation unit 112, a vaporization determination unit 113, a prohibiting unit 114, a differential pressure detecting unit 115, a deposition amount estimating unit 116, an emission amount accumulation unit 117, an excessive deposition determination unit 118 and an abnormality processing unit 119. Here, the temperature recognition unit 111, the period calculation unit 112, the vaporization determination unit 113, the prohibiting unit 114, the differential pressure detecting unit 115, the deposition amount estimating unit 116, the emission amount accumulation unit 117 and the excessive deposition determination unit 118 constitute the exhaust gas control system for an internal combustion engine according to the aspect of the invention.

Note that, in the first embodiment, description will be made on the case where the temperature recognition unit 111, the period calculation unit 112, the vaporization determination unit 113, the prohibiting unit 114, the differential pressure detecting unit 115, the deposition amount estimating unit 116, the emission amount accumulation unit 117 and the excessive deposition determination unit 118 that constitute the exhaust gas control system for an internal combustion engine are configured as functional units; instead, at least one of the temperature recognition unit 111, the period calculation unit 112, the vaporization determination unit 113, the prohibiting unit 114, the differential pressure detecting unit 115, the deposition amount estimating unit 116, the emission amount accumulation unit 117 and the excessive deposition determination unit 118 may be formed of a hardware device, such as an electronic circuit.

The temperature recognition unit 111 is a functional unit that recognizes the temperature TE of exhaust gas flowing into the DPF 22. Note that the temperature recognition unit 111 corresponds to "temperature recognition means" according to the aspect of the invention. Specifically, the temperature recognition unit 111 recognizes the temperature TE of exhaust gas flowing into the DPF 22 on the basis of the temperature TE of exhaust gas flowing into the DPF 22, detected by the second exhaust temperature sensor 37 (see FIG. 1).

In this way, the temperature TE of exhaust gas flowing into the DPF 22 is detected by the second exhaust temperature sensor 37, and the temperature TE of exhaust gas flowing into the DPF 22 is recognized on the basis of the detected temperature TE of exhaust gas, so it is possible to accurately recognize the temperature TE of exhaust gas flowing into the DPF 22.

In the first embodiment, description will be made on the case where the temperature TE of exhaust gas flowing into the DPF 22 is detected; instead, the temperature recognition unit 111 may be configured to estimate the temperature TE of exhaust gas flowing into the DPF 22. For example, the temperature recognition unit 111 may be configured to estimate the temperature TE of exhaust gas flowing into the DPF 22 on the basis of the temperature of exhaust gas flowing into the CCO 21, detected by the first exhaust temperature sensor 36. In this case, it is not necessary to arrange the second exhaust temperature sensor 37, so it is possible to reduce manufacturing cost.

The period calculation unit 112 is a functional unit that calculates a period during which the temperature TE of exhaust gas, recognized by the temperature recognition unit 111, is higher than or equal to a preset determination temperature TE0 (for example, 100°C). Note that the period calculation unit 112 corresponds to "period calculation means" according to the aspect of the invention.

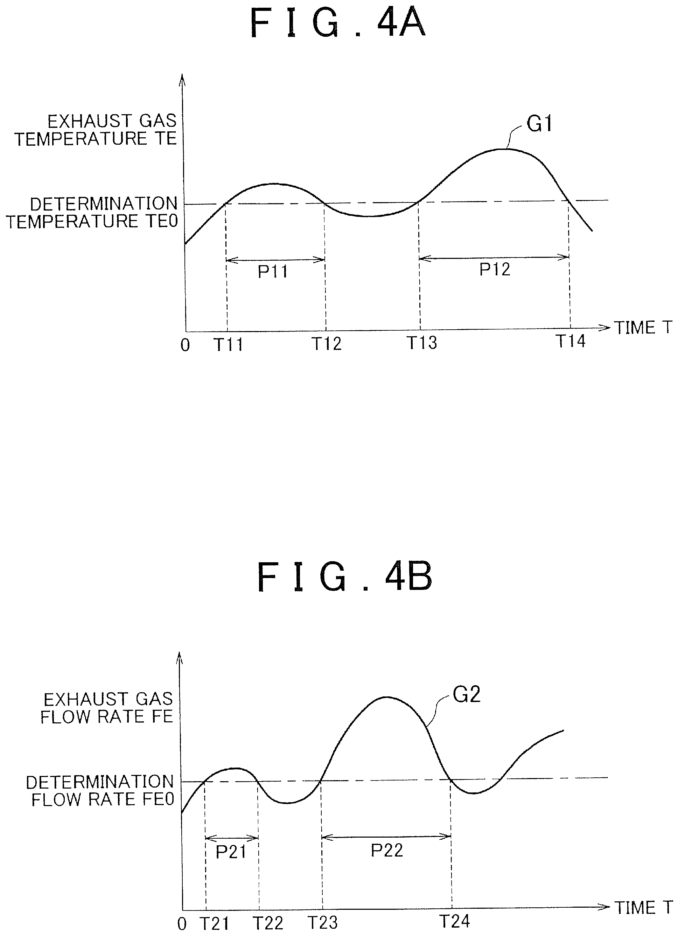

Specifically, the period calculation unit 112, for example, calculates a period, during which the temperature TE is continuously higher than or equal to the determination temperature TE0, as a continuous period PT. Here, the function of the period calculation unit 112 will be specifically described with reference to FIG. 4A and FIG. 4B. FIG. 4A is a graph G1 that shows an example of a temporal variation in exhaust gas temperature TE after a start of the engine 1. FIG. 4B is a graph G2 that shows an example of a temporal variation in exhaust gas flow rate FE after a start of the engine 1.

In FIG. 4A, the abscissa axis represents a time elapsed after a start of the engine 1, the ordinate axis represents a temperature TE of exhaust gas, detected by the second exhaust temperature sensor 37. As shown in FIG. 4A, at the time of a start of the engine 1, the temperature TE of exhaust gas is lower than the determination temperature TE0, and, at time T11, the temperature TE of exhaust gas reaches the determination temperature TE0. Then, after time T11, the temperature TE of exhaust gas is kept higher than or equal to the determination temperature TE0, and then the temperature TE of exhaust gas reaches the determination temperature TE0 at time T12. That is, during a period P11 from time T11 to time T12, the temperature TE of exhaust gas is higher than or equal to the determination temperature TE0. Thus, the period P11 is calculated as the continuous period PT.

Subsequently, after time T12, the temperature TE of exhaust gas is kept lower than the determination temperature TE0, and then the temperature TE of exhaust gas reaches the determination temperature TE0 at time T13. Thus, during a period from time T12 to time T13, the continuous period PT is calculated as "0". Then, after time T13, the temperature TE of exhaust gas is kept higher than or equal to the determination temperature TE0, and then the temperature TE of exhaust gas reaches the determination temperature TE0 at time T14. That is, during a period P12 from time T13 to time T14, the temperature TE of exhaust gas is higher than or equal to the determination temperature TE0. Thus, the period P12 is calculated as the continuous period PT.

Referring back to FIG. 3, the functional configuration of the ECU 100 will be described. The vaporization determination unit 113 is a functional unit that determines whether moisture absorbed in the DPF 22 has vaporized. Note that the vaporization determination unit 113 corresponds to "vaporization determination means" according to the aspect of the invention. Specifically, the vaporization determination unit 113 determines whether moisture absorbed in the DPF 22 has vaporized on the basis of the temperature TE of exhaust gas, recognized by the temperature recognition unit 111.

More specifically, the vaporization determination unit 113 determines that moisture absorbed in the DPF 22 has vaporized when the continuous period PT calculated by the period calculation unit 112 is longer than or equal to a preset determination period PA (for example, 10 minutes).

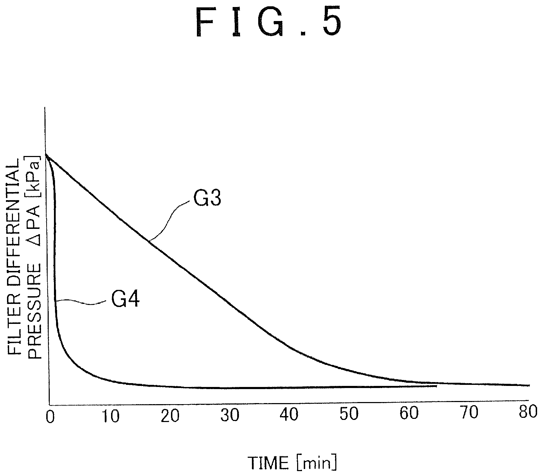

Here, the correlation between a temperature TE of exhaust gas and a period required for moisture to vaporize will be described with reference to FIG. 5. FIG. 5 shows a graph G3 and a graph G4 that respectively show examples of a temporal variation in filter differential pressure ΔPA after a start of the engine 1. The graph G3 shows the case where the temperature TE of exhaust gas is 100°C. The graph G4 shows the case where the temperature TE of exhaust gas is 80°C. In FIG. 5, the abscissa axis represents a time elapsed after a start of the engine 1, and the ordinate axis represents a filter differential pressure ΔPA detected by the differential pressure sensor 39.

As shown by the graph G4, when the temperature TE of exhaust gas is 100°C, moisture absorbed in the DPF 22 boils and steeply vaporizes, and, accordingly, the filter differential pressure ΔPA steeply decreases. In contrast to this, as shown by the graph G3, when the temperature TE of exhaust gas is 80°C, the amount of vaporization of moisture absorbed in the DPF 22 is small, and a decrease in the filter differential pressure ΔPA is gentle.

As shown in FIG. 5, as the temperature TE of exhaust gas flowing into the DPF 22 increases, moisture absorbed in the DPF 22 more easily vaporizes, so moisture absorbed in the DPF 22 vaporizes in a short period of time. Thus, by determining whether moisture absorbed in the DPF 22 has vaporized on the basis of the temperature TE of exhaust gas, it is possible to accurately determine whether moisture absorbed in the DPF 22 has vaporized.

In addition, as described above, the period calculation unit 112 calculates the continuous period PT during which the temperature TE of exhaust gas is higher than or equal to the preset determination temperature TE0, and the vaporization determination unit 113 determines that moisture absorbed in the DPF 22 has vaporized when the continuous period PT is longer than or equal to the present determination period PA, so it is possible to further accurately determine whether moisture absorbed in the DPF 22 has vaporized.

In the first embodiment, the description is made on the case where the vaporization determination unit 113 determines that moisture absorbed in the DPF 22 has vaporized when the continuous period PT is longer than or equal to the determination period PA; instead, the vaporization determination unit 113 may be configured to determine whether moisture absorbed in the DPF 22 has vaporized with the use of another method. For example, the vaporization determination unit 113 may be configured to determine that moisture absorbed in the DPF 22 has vaporized when an accumulated value of a period during which the temperature TE of exhaust gas is higher than or equal to the determination temperature TE0 (hereinafter, referred to as "accumulated period") is longer than or equal to the determination period PA. In this embodiment, in the case of the above-described FIG. 4A, an "accumulated period" at time T14 is calculated as the sum of the period P11 and the period P12.

Referring back to FIG. 3, the functional configuration of the ECU 100 will be described. The prohibiting unit 114 is a functional unit that prohibits the deposition amount estimating unit 116 from estimating the amount of deposition QP when the vaporization determination unit 113 determines that moisture absorbed in the DPF 22 has not vaporized. Note that the prohibiting unit 114 corresponds to "prohibiting means" according to the aspect of the invention.

In addition, the prohibiting unit 114 determines whether a preset period P0 has elapsed after a start of the engine 1, and, when it is determined that the period P0 has elapsed, the prohibiting unit 114 permits the deposition amount estimating unit 116 to execute the process of estimating the amount of deposition QP even when the vaporization determination unit 113 determines that moisture absorbed in the DPF 22 has not vaporized yet. Here, the period P0 is set to a value (for example, 30 minutes) by which it is allowed to determine that moisture absorbed in the DPF 22 has vaporized when the period P0 has elapsed from a start of the engine 1. Note that the period P0 is set so as to be longer (for example, 1 hour) as the outside air temperature decreases. This is because, as the outside air temperature decreases, it requires time until the temperature increases to a temperature at which condensed water vaporizes.

The differential pressure detecting unit 115 is a functional unit that detects a filter differential pressure ΔPA that is a difference in pressure, obtained by subtracting the pressure downstream of the DPF 22 from the pressure upstream of the DPF 22. Note that the differential pressure detecting unit 115 corresponds to "differential pressure detecting means" according to the aspect of the invention. Specifically, the differential pressure detecting unit 115 detects a filter differential pressure ΔPA by acquiring the filter differential pressure ΔPA detected by the differential pressure sensor 39.

The deposition amount estimating unit 116 is a functional unit that estimates the amount of deposition QP of PM trapped in the DPF 22 on the basis of the filter differential pressure ΔPA detected by the differential pressure detecting unit 115. Note that the deposition amount estimating unit 116 corresponds to "deposition amount estimating means" according to the aspect of the invention. Specifically, for example, a map (or LUT) that shows the correlation between a filter differential pressure ΔPA and an amount of deposition QP of PM is stored in the ROM 102, or the like, and the deposition amount estimating unit 116 loads the amount of deposition QP of PM, corresponding to the filter differential pressure ΔPA detected by the differential pressure detecting unit 115, from the map (or LUT) stored in the ROM 102, or the like, to estimate the amount of deposition QP of PM. In addition, the deposition amount estimating unit 116 does not execute the process of estimating the amount of deposition QP when estimating the amount of deposition QP is prohibited by the prohibiting unit 114.

The emission amount accumulation unit 117 is a functional unit that calculates the amount of emission of PM from the engine 1 and accumulates the calculated amount of emission to calculate an accumulated amount of emission QE. Note that the emission amount accumulation unit 117 corresponds to "emission amount accumulation means" according to the aspect of the invention. Specifically, for example, an amount of emission of PM is stored in the ROM 102, or the like, in association with an operating state (for example, engine rotation speed and fuel injection amount) of the engine 1, and the emission amount accumulation unit 117 loads the amount of emission of PM corresponding to the operating state of the engine 1 from the map (or LUT) stored in the ROM 102, or the like, to calculate the amount of emission of PM (see, for example, Japanese Patent Application Publication No. 2010-196498 (JP 2010-196498 A) in more detail).

The excessive deposition determination unit 118 is a functional unit that determines that the amount of deposition QP of PM trapped in the DPF 22 is abnormal when the amount of deposition QP of PM estimated by the deposition amount estimating unit 116 is larger than or equal to a preset excessive deposition determination value QPth. Note that the excessive deposition determination unit 118 corresponds to "excessive deposition determination means" according to the aspect of the invention. In addition, when the prohibiting unit 114 prohibits the deposition amount estimating unit 116 from estimating the amount of deposition QP, the excessive deposition determination unit 118 estimates the amount of deposition QP of PM trapped in the DPF 22 on the basis of the accumulated amount of emission QE calculated by the emission amount accumulation unit 117, and determines whether the estimated amount of deposition QP of PM is abnormal.

As described above, the emission amount accumulation unit 117 calculates the amount of emission of PM from the engine 1, and calculates the accumulated amount of emission QE by accumulating the calculated amount of emission. Then, when the prohibiting unit 114 prohibits the deposition amount estimating unit 116 from executing the process of estimating the amount of deposition QP on the basis of the filter differential pressure ΔPA, it is determined whether the amount of deposition QP of PM trapped in the DPF 22 is abnormal on the basis of the accumulated amount of emission QE. Therefore, even when estimating the amount of deposition QP on the basis of the filter differential pressure ΔPA is prohibited, it is possible to determine whether the amount of deposition QP of PM trapped in the DPF 22 is abnormal.

In the first embodiment, the description is made on the case where, when the prohibiting unit 114 prohibits the deposition amount estimating unit 116 from executing the process of estimating the amount of deposition QP, the excessive deposition determination unit 118 determines whether the amount of deposition QP of PM trapped in the DPF 22 is abnormal on the basis of the accumulated amount of emission QE calculated by the emission amount accumulation unit 117; instead, the excessive deposition determination unit 118 may be configured to determine whether the amount of deposition QP of PM trapped in the DPF 22 is abnormal with the use of another method. For example, it is applicable that, before the prohibiting unit 114 prohibits the deposition amount estimating unit 116 from executing the process of estimating the amount of deposition QP, a history of the amount of deposition QP calculated by the deposition amount estimating unit 116 is stored in the backup RAM 104, or the like, and the excessive deposition determination unit 118 estimates the amount of deposition QP on the basis of the history of the amount of deposition QP. In this case, the emission amount accumulation unit 117 is not required.

The abnormality processing unit 119 is a functional unit that executes preset "abnormality process" when the excessive deposition determination unit 118 determines that the amount of deposition QP of PM trapped in the DPF 22 is abnormal. Specifically, when it is determined that the amount of deposition QP of PM is abnormal, for example, the abnormality processing unit 119 announces an alarm that indicates that the amount of deposition QP of PM is abnormal, and prohibits the process of burning the deposited PM (particulate matter).

Specifically, the alarm that indicates that the amount of deposition QP of PM is abnormal is to, for example, turn on a light emitting diode (LED) that indicates that the amount of deposition QP of PM is abnormal and outputs voice of a message that the amount of deposition QP of PM is abnormal. In addition, the abnormality processing unit 119 stops injection of fuel from the adding injectors 2 for burning deposited PM (particulate matter) to stop the process of burning the deposited PM (particulate matter).

Operations of ECU (First Embodiment)

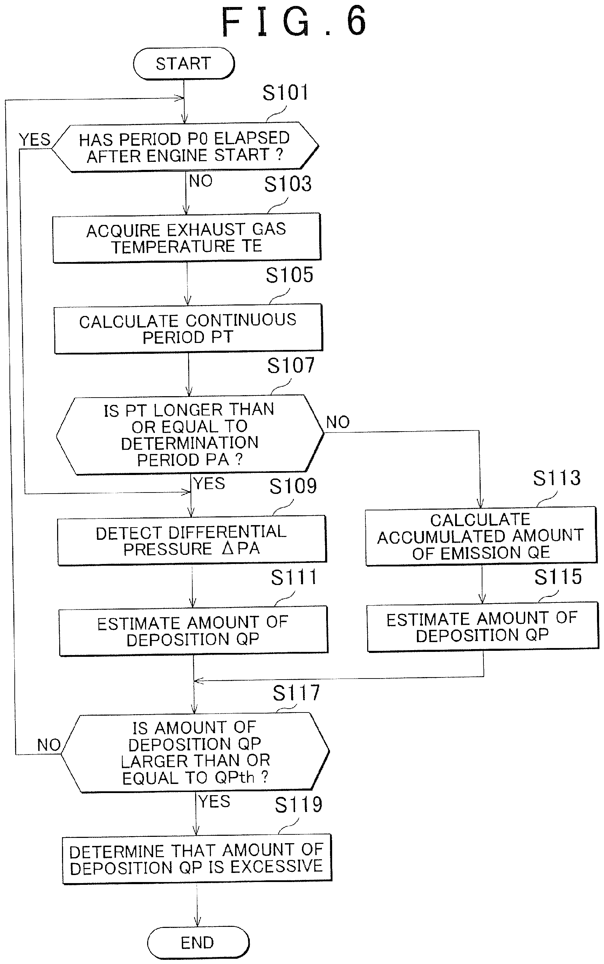

Next, the operations of the ECU 100 will be described with reference to FIG. 6. FIG. 6 is a flowchart that shows an example of operations of the ECU 100 according to the first embodiment of the invention, shown in FIG. 3. As shown in FIG. 6, first, the prohibiting unit 114 determines whether the period P0 has elapsed after a start of the engine 1 (S101). When affirmative determination is made in step S101, the process proceeds to step S109. When negative determination is made in step S101, the process proceeds to step S103.

Subsequently, the temperature recognition unit 111 acquires the temperature TE of exhaust gas, detected by the second exhaust temperature sensor 37 (step S103). Then, the period calculation unit 112 calculates the continuous period PT during which the temperature TE acquired in step S103 is continuously higher than or equal to the determination temperature TE0 (step S105). Subsequently, the vaporization determination unit 113 determines whether the continuous period PT calculated in step S105 is longer than or equal to the determination period PA (step S107). When negative determination is made in step S107, the vaporization determination unit 113 determines that moisture absorbed in the DPF 22 has not vaporized yet, and the prohibiting unit 114 prohibits the process of estimating the amount of deposition QP on the basis of the filter differential pressure ΔPA, after which the process proceeds to step S113.

When affirmative determination is made in step S107, the vaporization determination unit 113 determines that moisture absorbed in the DPF 22 has vaporized, and the process proceeds to step S109. Subsequently, the differential pressure detecting unit 115 detects the filter differential pressure ΔPA (step S109). After that, the deposition amount estimating unit 116 estimates the amount of deposition QP of PM trapped in the DPF 22 on the basis of the filter differential pressure ΔPA detected in step S109 (step S111). Then, the process proceeds to step S117.

On the other hand, when negative determination is made in step S107, the emission amount accumulation unit 117 calculates an accumulated amount of emission QE that is an accumulated value of the amount of emission of PM emitted from the engine 1 (step S113). Subsequently, the excessive deposition determination unit 118 estimates the amount of deposition QP on the basis of the accumulated amount of emission QE calculated in step S113 (step S115). Then, the process proceeds to step S117.

When the process of step S111 ends or when the process of step S115 ends, the excessive deposition determination unit 118 determines whether the amount of deposition QP calculated in step S111 or step S115 is larger than or equal to the excessive deposition determination value QPth (step S117). When negative determination is made in step S117, the excessive deposition determination unit 118 determines that the amount of deposition QP is not abnormal, and the process returns to step S101, after which the process of step S101 and the following processes are executed again.

When affirmative determination is made in step S117, the process proceeds to step S119. Then, the excessive deposition determination unit 118 determines that the amount of deposition QP is abnormal, and the abnormality processing unit 119 announces an alarm and stops injection of fuel from the adding injectors 2, after which the process ends.

In this way, when it is determined that moisture absorbed in the DPF 22 has not vaporized yet, estimating the amount of deposition QP on the basis of the filter differential pressure ΔPA is prohibited. This avoids a situation that a filter differential pressure ΔPA is detected to be excessive due to moisture absorbed in the DPF 22 and the amount of deposition QP of PM trapped in the DPF 22 is estimated to be excessive on the basis of the excessive filter differential pressure ΔPA. Thus, it is possible to prevent determination, due to absorbed moisture, that the amount of deposition QP of PM trapped in the DPF 22 is abnormal (excessive deposition).

Functional Configuration of ECU (Second Embodiment)

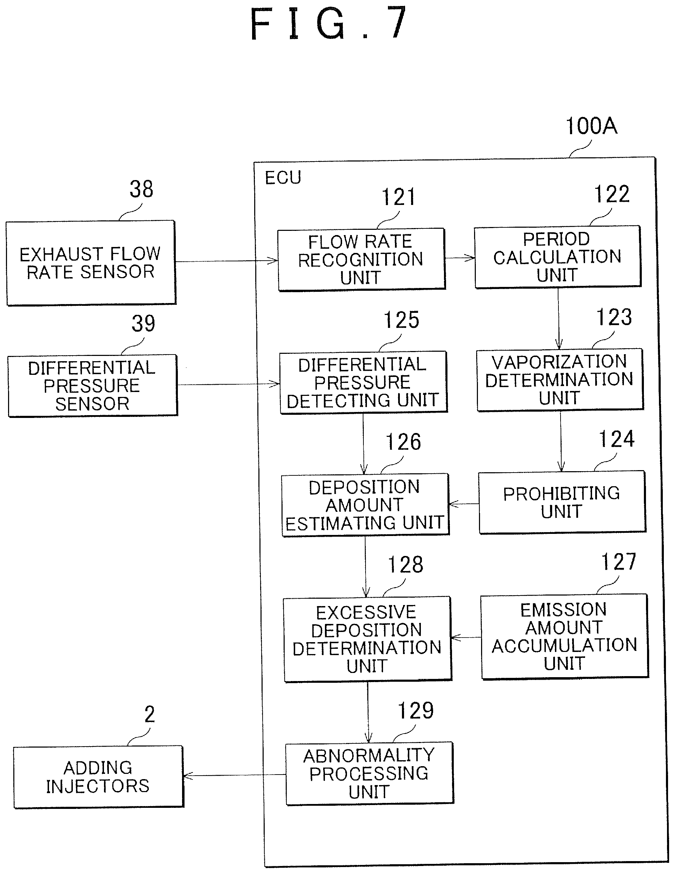

Next, the configuration of a main portion of the exhaust gas control system for an internal combustion engine according to the aspect of the invention will be described with reference to FIG. 7. FIG. 7 is a functional configuration diagram that shows an example (second embodiment) of the configuration of the main portion of the exhaust gas control system for an internal combustion engine according to the aspect of the invention.

As shown in FIG. 7, when the CPU 101 loads the control programs stored in the ROM 102, or the like, and executes the control programs, the ECU 100A functions as functional units, such as a flow rate recognition unit 121, a period calculation unit 122, a vaporization determination unit 123, a prohibiting unit 124, a differential pressure detecting unit 125, a deposition amount estimating unit 126, an emission amount accumulation unit 127, an excessive deposition determination unit 128 and an abnormality processing unit 129. Here, the flow rate recognition unit 121, the period calculation unit 122, the vaporization determination unit 123, the prohibiting unit 124, the differential pressure detecting unit 125, the deposition amount estimating unit 126, the emission amount accumulation unit 127 and the excessive deposition determination unit 128 constitute the exhaust gas control system for an internal combustion engine according to the aspect of the invention.

Note that, in the second embodiment, description will be made on the case where the flow rate recognition unit 121, the period calculation unit 122, the vaporization determination unit 123, the prohibiting unit 124, the differential pressure detecting unit 125, the deposition amount estimating unit 126, the emission amount accumulation unit 127 and the excessive deposition determination unit 128 that constitute the exhaust gas control system for an internal combustion engine are configured as functional units; instead, at least one of the flow rate recognition unit 121, the period calculation unit 122, the vaporization determination unit 123, the prohibiting unit 124, the differential pressure detecting unit 125, the deposition amount estimating unit 126, the emission amount accumulation unit 127 and the excessive deposition determination unit 128 may be formed of a hardware device, such as an electronic circuit.

In addition, the ECU 100A according to the second embodiment differs from the ECU 100 (see FIG. 3) according to the first embodiment in that the flow rate recognition unit 121, the period calculation unit 122 and the vaporization determination unit 123 are provided instead of the temperature recognition unit 111, the period calculation unit 112 and the vaporization determination unit 113. Thus, in the following description, the configuration (the flow rate recognition unit 121, the period calculation unit 122 and the vaporization determination unit 123) different from the ECU 100 according to the first embodiment will be mainly described.

In addition, the prohibiting unit 124, the differential pressure detecting unit 125, the deposition amount estimating unit 126, the emission amount accumulation unit 127, the excessive deposition determination unit 128 and the abnormality processing unit 129 of the ECU 100A are respectively the functional units having substantially the same functions as the prohibiting unit 114, the differential pressure detecting unit 115, the deposition amount estimating unit 116, the emission amount accumulation unit 117, the excessive deposition determination unit 118 and the abnormality processing unit 119 of the ECU 100 (see FIG. 3) according to the first embodiment.

The flow rate recognition unit 121 is a functional unit that recognizes the flow rate FE of exhaust gas flowing into the DPF 22. Note that the flow rate recognition unit 121 corresponds to "flow rate recognition means" according to the aspect of the invention. Specifically, the flow rate recognition unit 121 recognizes the flow rate FE of exhaust gas flowing into the DPF 22 on the basis of the flow rate FE of exhaust gas flowing into the DPF 22, detected by the exhaust flow rate sensor 38 (see FIG. 1).

In this way, the flow rate FE of exhaust gas flowing into the DPF 22 is detected by the exhaust flow rate sensor 38, and the flow rate FE of exhaust gas flowing into the DPF 22 is recognized on the basis of the detected flow rate FE of exhaust gas, so it is possible to accurately recognize the flow rate FE of exhaust gas flowing into the DPF 22.

In the second embodiment, description will be made on the case where the flow rate FE of exhaust gas flowing into the DPF 22 is detected; instead, the flow rate recognition unit 121 may be configured to estimate the flow rate FE of exhaust gas flowing into the DPF 22. For example, the flow rate recognition unit 121 may be configured to estimate the flow rate FE of exhaust gas flowing into the DPF 22 on the basis of the intake air flow rate detected by the air flow meter 33. In this case, it is not necessary to arrange the exhaust flow rate sensor 38, so it is possible to reduce manufacturing cost. In addition, for example, when an air flow meter is arranged in the exhaust passage 4 at a portion upstream of the CCO 21, the flow rate recognition unit 121 may be configured to estimate the flow rate FE of exhaust gas flowing into the DPF 22 on the basis of the flow rate of exhaust gas flowing into the CCO 21, detected by the air flow meter.

The period calculation unit 122 is a functional unit that calculates a period during which the flow rate FE of exhaust gas, recognized by the flow rate recognition unit 121, is higher than or equal to a preset determination flow rate FE0 (for example, 10 g/s). Note that the period calculation unit 112 corresponds to "period calculation means) according to the aspect of the invention.

Specifically, the period calculation unit 112, for example, calculates a period, during which the flow rate FE is continuously higher than or equal to the determination flow rate FE0, as the continuous period PF. Here, the function of the period calculation unit 122 will be specifically described with reference to FIG. 4A and FIG. 4B. FIG. 4A is a graph G1 that shows an example of a temporal variation in exhaust gas temperature TE after a start of the engine 1. FIG. 4B is a graph G2 that shows an example of a temporal variation in exhaust gas flow rate FE after a start of the engine 1.

In FIG. 4B, the abscissa axis represents a time elapsed after a start of the engine 1, and the ordinate axis represents a flow rate FE of exhaust gas, detected by the exhaust flow rate sensor 38. As shown in FIG. 4B, at the time of a start of the engine 1, the flow rate FE of exhaust gas is lower than the determination flow rate FE0, and, at time T21, the flow rate FE of exhaust gas reaches the determination flow rate FE0. Then, after time T21, the flow rate FE of exhaust gas is kept higher than or equal to the determination flow rate FE0, and then the flow rate FE of exhaust gas reaches the determination flow rate FE0 at time T22. That is, during a period P21 from time T21 to time T22, the flow rate FE of exhaust gas is higher than or equal to the determination flow rate FE0. Thus, the period P21 is calculated as the continuous period PF.

Subsequently, after time T22, the flow rate FE of exhaust gas is kept lower than the determination flow rate FE0, and then the flow rate FE of exhaust gas reaches the determination flow rate FE0 at time T23. Thus, during a period from time T22 to time T23, the continuous period PF is calculated as "0". Then, after time T23, the flow rate FE of exhaust gas is kept higher than or equal to the determination flow rate FE0, and then the flow rate FE of exhaust gas reaches the determination flow rate FE0 at time T24. That is, during a period P22 from time T23 to time T24, the flow rate FE of exhaust gas is higher than or equal to the determination flow rate FE0. Thus, the period P22 is calculated as the continuous period PT.

Referring back to FIG. 7, the functional configuration of the ECU 100A will be described. The vaporization determination unit 123 is a functional unit that determines whether moisture absorbed in the DPF 22 has vaporized. Note that the vaporization determination unit 123 corresponds to "vaporization determination means" according to the aspect of the invention. Specifically, the vaporization determination unit 123 determines whether moisture absorbed in the DPF 22 has vaporized on the basis of the flow rate FE of exhaust gas, recognized by the flow rate recognition unit 121.

More specifically, the vaporization determination unit 123 determines that moisture absorbed in the DPF 22 has vaporized when the continuous period PT calculated by the period calculation unit 122 is longer than or equal to a preset determination period PB (for example, 20 minutes).

In addition, as the flow rate FE of exhaust gas flowing into the DPF 22 increases, moisture absorbed in the DPF 22 more easily vaporizes, so moisture absorbed in the DPF 22 vaporizes in a short period of time. Thus, by determining whether moisture absorbed in the DPF 22 has vaporized on the basis of the flow rate FE of exhaust gas, it is possible to accurately determine whether moisture absorbed in the DPF 22 has vaporized.

Furthermore, as described above, the period calculation unit 122 calculates the continuous period PF during which the flow rate FE of exhaust gas is higher than or equal to the preset determination flow rate FE0, and the vaporization determination unit 123 determines that moisture absorbed in the DPF 22 has vaporized when the continuous period PT is longer than or equal to the present determination period PB, so it is possible to further accurately determine whether moisture absorbed in the DPF 22 has vaporized.

In the second embodiment, the description is made on the case where the vaporization determination unit 123 determines that moisture absorbed in the DPF 22 has vaporized when the continuous period PT is longer than or equal to the determination period PB; instead, the vaporization determination unit 123 may be configured to determine whether moisture absorbed in the DPF 22 has vaporized with the use of another method. For example, the vaporization determination unit 123 may be configured to determine that moisture absorbed in the DPF 22 has vaporized when an accumulated value of a period during which the flow rate FE of exhaust gas is higher than or equal to the determination flow rate FE0 (hereinafter, referred to as "accumulated period") is longer than or equal to the determination period PB. In this embodiment, in the case of the above-described FIG. 4B, an "accumulated period" at time T24 is calculated as the sum of the period P21 and the period P22.

Operations of ECU (Second Embodiment)

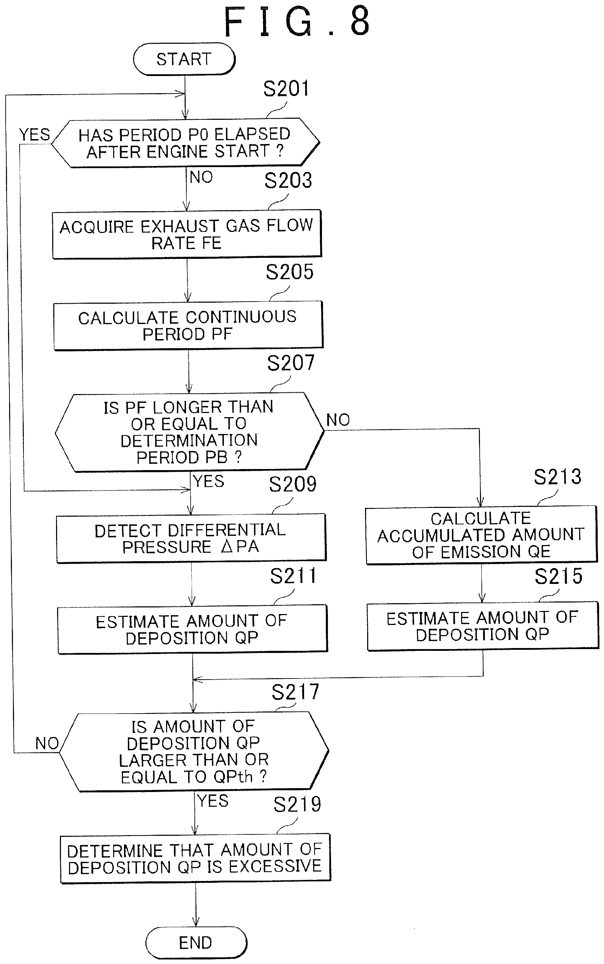

Next, the operations of the ECU 100A will be described with reference to FIG. 8. FIG. 8 is a flowchart that shows an example of operations of the ECU 100A according to the second embodiment of the invention, shown in FIG. 7. As shown in FIG. 8, first, the prohibiting unit 124 determines whether the period P0 has elapsed after a start of the engine 1 (S201). When affirmative determination is made in step S201, the process proceeds to step S209. When negative determination is made in step S201, the process proceeds to step S203.

Subsequently, the flow rate recognition unit 121 acquires the flow rate FE of exhaust gas, detected by the exhaust flow rate sensor 38 (step S203). Then, the period calculation unit 122 calculates the continuous period PF during which the flow rate FE acquired in step S203 is continuously higher than or equal to the determination flow rate FE0 (step S205). Subsequently, the vaporization determination unit 123 determines whether the continuous period PT calculated in step S205 is longer than or equal to the determination period PB (step S207). When affirmative determination is made in step S207, the vaporization determination unit 123 determines that moisture absorbed in the DPF 22 has vaporized, and the process proceeds to step S209. When negative determination is made in step S207, the vaporization determination unit 123 determines that moisture absorbed in the DPF 22 has not vaporized yet, and the prohibiting unit 124 prohibits the process of estimating the amount of deposition QP on the basis of the filter differential pressure ΔPA, after which the process proceeds to step S213.

The process of step S209 and the following processes and the process of step S213 and the following processes are respectively substantially the same as the process of step S109 and the following processes in the flowchart shown in FIG. 6 and the process of step S113 and the following processes in the flowchart shown in FIG. 6, so the description thereof is omitted.

In this way, the flow rate FE of exhaust gas flowing into the DPF 22 is recognized, and it is determined whether moisture absorbed in the DPF 22 has vaporized on the basis of the recognized flow rate FE of exhaust gas, so it is possible to accurately determine whether moisture absorbed in the DPF 22 has vaporized.

That is, as the flow rate FE of exhaust gas flowing into the DPF 22 increases, moisture absorbed in the DPF 22 more easily vaporizes, so moisture absorbed in the DPF 22 vaporizes in a short period of time. Thus, by determining whether moisture absorbed in the DPF 22 has vaporized on the basis of the flow rate FE of exhaust gas, recognized in the flow rate recognition unit 121, it is possible to accurately determine whether moisture absorbed in the DPF 22 has vaporized.

Functional Configuration of ECU (Third Embodiment)

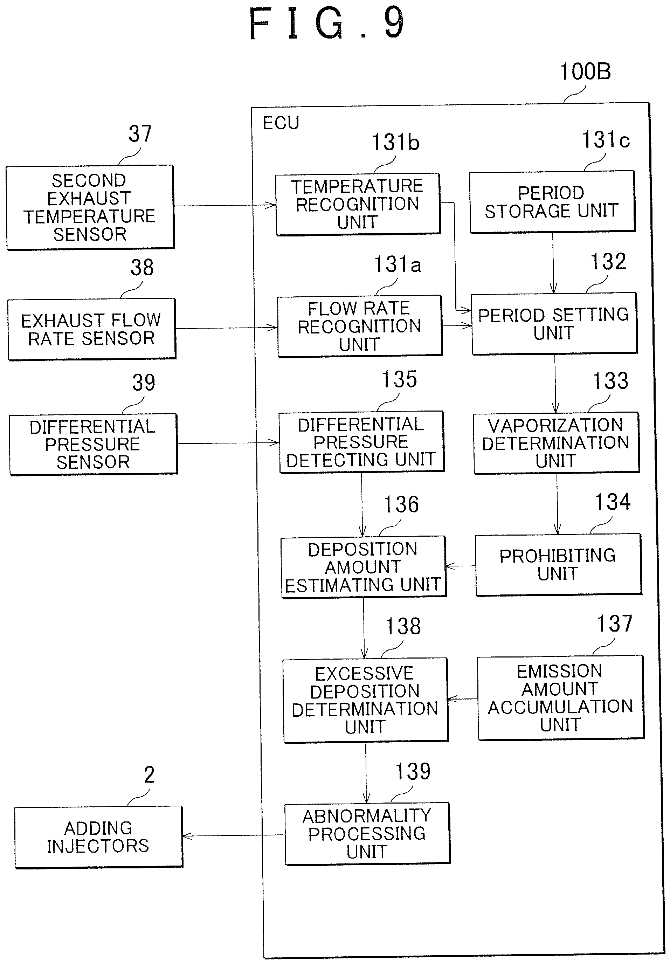

Next, the configuration of a main portion of the exhaust gas control system for an internal combustion engine according to the aspect of the invention will be described with reference to FIG. 9. FIG. 9 is a functional configuration diagram that shows an example (third embodiment) of the configuration of the main portion of the exhaust gas control system for an internal combustion engine according to the aspect of the invention.

As shown in FIG. 9, when the CPU 101 loads the control programs stored in the ROM 102, or the like, and executes the control programs, the ECU 100B functions as functional units, such as a flow rate recognition unit 131a, a temperature recognition unit 131b, a period storage unit 131c, a period setting unit 132, a vaporization determination unit 133, a prohibiting unit 134, a differential pressure detecting unit 135, a deposition amount estimating unit 136, an emission amount accumulation unit 137, an excessive deposition determination unit 138 and an abnormality processing unit 139. Here, the flow rate recognition unit 131a, the temperature recognition unit 131b, the period storage unit 131c, the period setting unit 132, the vaporization determination unit 133, the prohibiting unit 134, the differential pressure detecting unit 135, the deposition amount estimating unit 136, the emission amount accumulation unit 137 and the excessive deposition determination unit 138 constitute the exhaust gas control system for an internal combustion engine according to the aspect of the invention.

Note that, in the third embodiment, description will be made on the case where the flow rate recognition unit 131a, the temperature recognition unit 131b, the period storage unit 131c, the period setting unit 132, the vaporization determination unit 133, the prohibiting unit 134, the differential pressure detecting unit 135, the deposition amount estimating unit 136, the emission amount accumulation unit 137 and the excessive deposition determination unit 138 that constitute the exhaust gas control system for an internal combustion engine are configured as functional units; instead, at least one of the flow rate recognition unit 131a, the temperature recognition unit 131b, the period storage unit 131c, the period setting unit 132, the vaporization determination unit 133, the prohibiting unit 134, the differential pressure detecting unit 135, the deposition amount estimating unit 136, the emission amount accumulation unit 137 and the excessive deposition determination unit 138 may be formed of a hardware device, such as an electronic circuit.

In addition, the ECU 100B according to the third embodiment differs from the ECU 100 (see FIG. 3) according to the first embodiment in that the flow rate recognition unit 131a, the temperature recognition unit 131b, the period storage unit 131c, the period setting unit 132 and the vaporization determination unit 133 are provided instead of the temperature recognition unit 111, the period calculation unit 112 and the vaporization determination unit 113. Thus, in the following description, the configuration (the flow rate recognition unit 131a, the temperature recognition unit 131b, the period storage unit 131c, the period setting unit 132 and the vaporization determination unit 133) different from the ECU 100 according to the first embodiment will be mainly described.

In addition, the prohibiting unit 134, the differential pressure detecting unit 135, the deposition amount estimating unit 136, the emission amount accumulation unit 137, the excessive deposition determination unit 138 and the abnormality processing unit 139 of the ECU 100B are respectively the functional units having substantially the same functions as the prohibiting unit 114, the differential pressure detecting unit 115, the deposition amount estimating unit 116, the emission amount accumulation unit 117, the excessive deposition determination unit 118 and the abnormality processing unit 119 of the ECU 100 (see FIG. 3) according to the first embodiment.

The flow rate recognition unit 131a is a functional unit that recognizes the flow rate FE of exhaust gas flowing into the DPF 22. Note that the flow rate recognition unit 131a corresponds to "flow rate recognition means" according to the aspect of the invention. Specifically, the flow rate recognition unit 131a recognizes the flow rate FE of exhaust gas flowing into the DPF 22 on the basis of the flow rate FE of exhaust gas flowing into the DPF 22, detected by the exhaust flow rate sensor 38 (see FIG. 1).

In this way, the flow rate FE of exhaust gas flowing into the DPF 22 is detected by the exhaust flow rate sensor 38, and the flow rate FE of exhaust gas flowing into the DPF 22 is recognized on the basis of the detected flow rate FE of exhaust gas, so it is possible to accurately recognize the flow rate FE of exhaust gas flowing into the DPF 22.

In the third embodiment, description will be made on the case where the flow rate FE of exhaust gas flowing into the DPF 22 is detected; instead, the flow rate recognition unit 131a may be configured to estimate the flow rate FE of exhaust gas flowing into the DPF 22. For example, the flow rate recognition unit 131a may be configured to estimate the flow rate FE of exhaust gas flowing into the DPF 22 on the basis of the intake air flow rate detected by the air flow meter 33. In this case, it is not necessary to arrange the exhaust flow rate sensor 38, so it is possible to reduce manufacturing cost. In addition, for example, when an exhaust flow rate sensor is arranged in the exhaust passage 4 at a portion upstream of the CCO 21, the flow rate recognition unit 131a may be configured to estimate the flow rate FE of exhaust gas flowing into the DPF 22 on the basis of the flow rate of exhaust gas flowing into the CCO 21, detected by the exhaust flow rate sensor.

The temperature recognition unit 131b is a functional unit that recognizes the temperature TE of exhaust gas flowing into the DPF 22. Note that the temperature recognition unit 131b corresponds to "temperature recognition means" according to the aspect of the invention. Specifically, the temperature recognition unit 131b recognizes the temperature TE of exhaust gas flowing into the DPF 22 on the basis of the temperature TE of exhaust gas flowing into the DPF 22, detected by the second exhaust temperature sensor 37 (see FIG. 1).

In this way, the temperature TE of exhaust gas flowing into the DPF 22 is detected by the second exhaust temperature sensor 37, and the temperature TE of exhaust gas flowing into the DPF 22 is recognized on the basis of the detected temperature TE of exhaust gas, so it is possible to accurately recognize the temperature TE of exhaust gas flowing into the DPF 22.

In the third embodiment, description will be made on the case where the temperature TE of exhaust gas flowing into the DPF 22 is detected; instead, the temperature recognition unit 131b may be configured to estimate the temperature TE of exhaust gas flowing into the DPF 22. For example, the temperature recognition unit 131b may be configured to estimate the temperature TE of exhaust gas flowing into the DPF 22 on the basis of the temperature of exhaust gas flowing into the CCO 21, detected by the first exhaust temperature sensor 36. In this case, it is not necessary to arrange the second exhaust temperature sensor 37, so it is possible to reduce manufacturing cost.

The period storage unit 131c is a functional unit that stores a determination period PC0 in association with the flow rate FE of exhaust gas and the temperature TE of exhaust gas. The determination period PC0 is a period by which it is determined whether moisture absorbed in the DPF 22 has vaporized. Note that the period storage unit 131c corresponds to part of "period setting means" according to the aspect of the invention. Specifically, the period storage unit 131c, for example, stores the determination period PC0 in association with the flow rate FE of exhaust gas and the temperature TE of exhaust gas as a map or LUT in the ROM 102. The determination period PC0 stored in the period storage unit 131c is loaded by the period setting unit 132.

The period setting unit 132 is a functional unit that sets a determination period PC on the basis of the temperature TE of exhaust gas, recognized by the temperature recognition unit 131b, and the flow rate FE of exhaust gas, recognized by the flow rate recognition unit 131a. The determination period PC is a period by which it is determined whether moisture absorbed in the DPF 22 has vaporized. Note that the period setting unit 132 corresponds to part of the "period setting means" according to the aspect of the invention.

Specifically, the period setting unit 132, for example, loads the determination period PC0 corresponding to the temperature TE of exhaust gas, recognized by the temperature recognition unit 131b, and the flow rate FE of exhaust gas, recognized by the flow rate recognition unit 131a, from the period storage unit 131c, and corrects the determination period PC previously set by the period setting unit 132 with the use of the loaded determination period PC0 to thereby set a determination period PC.

More specifically, where the determination periods PC0 loaded by the period setting unit 132 from the period storage unit 131c after a start of the engine 1 are determination periods PC1, PC2, ..., PCN (here, N is the number of times the determination period PC0 is loaded by the period setting unit 132 from the period storage unit 131c) in time sequence, the period setting unit 132, for example, calculates the determination period PC by the following mathematical expression (1).

$$PC = (PC1 + PC2 + ... + PCN)/N \qquad (1)$$

That is, the period setting unit 132 calculates the determination period PC by simply averaging the determination periods PC0 loaded from the period storage unit 131c. The process expressed by the above mathematical expression (1) is expressed as a process in which the period setting unit 132 corrects the determination period PC previously set by the period setting unit 132 with the use of the loaded determination periods PC0 by the following mathematical expression (2).

$$PC \leftarrow (PC \times (N-1) + PC0)/N \qquad (2)$$

That is, the current determination period PC may be obtained as follows. The previous determination period PC is multiplied by (N-1) that is the number of times loaded from the period storage unit 131c until the last time, the obtained value is added to the currently loaded determination period PC0, and then the obtained value is divided by the loaded number of times N.

Note that, in the third embodiment, description will be made on the case where the period setting unit 132 calculates the determination period PC by simply averaging the determination periods PC0 loaded from the period storage unit 131c; instead, the period setting unit 132 may be configured to calculate the determination period PC with the use of another method. For example, the determination period PC may be calculated with the use of a weighted mean method. In this case, by appropriately setting weights, it is possible to set a further appropriate determination period PC.

The vaporization determination unit 133 is a functional unit that determines whether moisture absorbed in the DPF 22 has vaporized. Note that the vaporization determination unit 133 corresponds to "vaporization determination means." according to the aspect of the invention. Specifically, the vaporization determination unit 133 determines whether moisture absorbed in the DPF 22 has vaporized on the basis of the determination period PC set by the period setting unit 132. More specifically, the vaporization determination unit 133 determines that moisture absorbed in the DPF 22 has vaporized when the determination period PC set by the period setting unit 132 has elapsed.

In this way, the determination period PC that is a period by which it is determined whether moisture absorbed in the DPF 22 has vaporized is set on the basis of the temperature TE of exhaust gas, recognized by the temperature recognition unit 131b, and the flow rate FE of exhaust gas, recognized by the flow rate recognition unit 131a. Then, it is determined that moisture absorbed in the DPF 22 has vaporized when the set determination period PC has elapsed, so it is possible to accurately determine whether moisture absorbed in the DPF 22 has vaporized.

Operations of ECU (Third Embodiment)

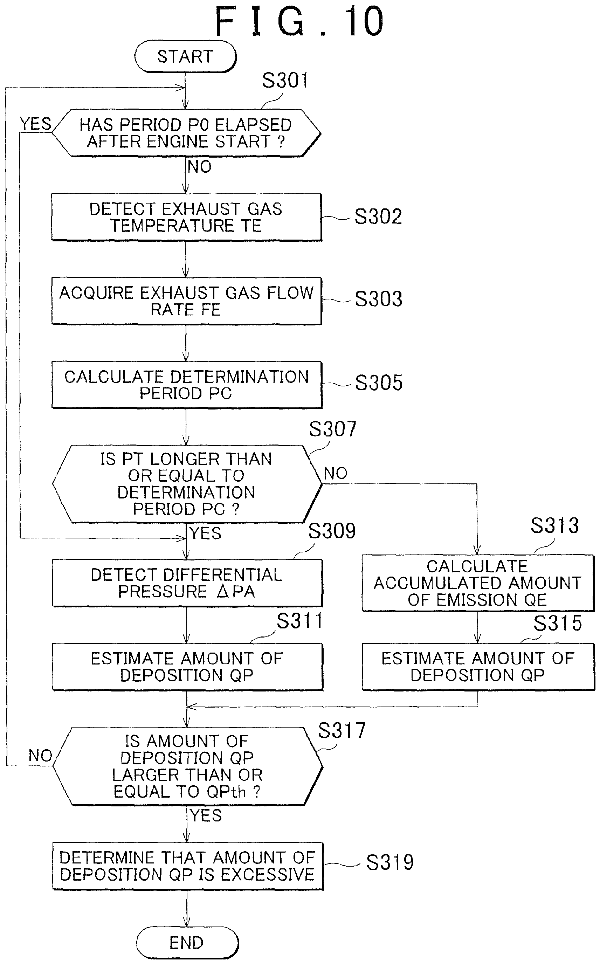

Next, the operations of the ECU 100B will be described with reference to FIG. 10. FIG. 10 is a flowchart that shows an example of operations of the ECU 100B according to the third embodiment of the invention, shown in FIG. 9. As shown in FIG. 10, first, the prohibiting unit 134 determines whether the period P0 has elapsed after a start of the engine 1 (S301). When affirmative determination is made in step S301, the process proceeds to step S309. When negative determination is made in step S301, the process proceeds to step S302.

Subsequently, the temperature recognition unit 131b acquires the temperature TE of exhaust gas, detected by the second exhaust temperature sensor 37 (step S302). Then, the flow rate recognition unit 131a acquires the flow rate FE of exhaust gas, detected by the exhaust flow rate sensor 38 (step S303). After that, the period setting unit 132 loads the determination period PC0 corresponding to the temperature TE acquired in step S302 and the flow rate FE acquired in step S303 from the period storage unit 131c, and sets the determination period PC that is a period by which it is determined whether moisture absorbed in the DPF 22 has vaporized (step S305). Subsequently, the vaporization determination unit 133 determines whether the determination period PC calculated in step S305 has elapsed (step S307). When affirmative determination is made in step S307, the vaporization determination unit 133 determines that moisture absorbed in the DPF 22 has vaporized, and the process proceeds to step S309. When negative determination is made in step S307, the vaporization determination unit 133 determines that moisture absorbed in the DPF 22 has not vaporized yet, and the prohibiting unit 134 prohibits the process of estimating the amount of deposition QP on the basis of the filter differential pressure ΔPA, after which the process proceeds to step S313.

The process of step S309 and the following processes and the process of step S313 and the following processes are respectively substantially the same as the process of step S109 and the following processes in the flowchart shown in FIG. 6 and the process of step S113 and the following processes in the flowchart shown in FIG. 6, so the description thereof is omitted.

In this way, the temperature TE of exhaust gas flowing into the DPF 22 is recognized, and the flow rate FE of exhaust gas flowing into the DPF 22 is recognized. Then, it is determined whether moisture absorbed in the DPF 22 has vaporized on the basis of the recognized temperature TE of exhaust gas and the recognized flow rate FE of exhaust gas, so it is possible to accurately determine whether moisture absorbed in the

DPF 22 has vaporized.

That is, as the temperature TE of exhaust gas flowing into the DPF 22 increases, moisture absorbed in the DPF 22 more easily vaporizes, so moisture absorbed in the DPF 22 vaporizes in a short period of time. In addition, as the flow rate FE of exhaust gas flowing into the DPF 22 increases, moisture absorbed in the DPF 22 more easily vaporizes, so moisture absorbed in the DPF 22 vaporizes in a short period of time. Thus, by determining whether moisture absorbed in the DPF 22 has vaporized on the basis of the recognized temperature TE of exhaust gas and the recognized flow rate FE of exhaust gas, it is possible to accurately determine whether moisture absorbed in the DPF 22 has vaporized.

Alternative Embodiments

In the first embodiment, the second embodiment and the third embodiment (hereinafter, collectively referred to as "present embodiments"), the description is made on the case where the internal combustion engine is the diesel engine 1; instead, the internal combustion engine may be a gasoline engine, or the like.

In the present embodiments, the description is made on the case where the filter that traps PM contained in exhaust gas is the DPF 22; instead, the filter may be of other types. The filter that traps PM contained in exhaust gas may be a diesel particulate active reduction system (DPR) that is a filter with a catalyst, which combines an oxidation catalyst with a DPF for trapping PM or a diesel particulate-NOx reduction system (DPNR) that includes an NOx storage reduction (NSR) and a diesel particulate active reduction system (DPR).

The aspect of the invention may be used in an exhaust gas control system for an internal combustion engine that includes a filter that traps particulate matter contained in exhaust gas emitted from the internal combustion engine (mainly, a diesel engine).

**Claims**

1. An exhaust gas control system for an internal combustion engine that includes a filter that traps particulate matter contained in exhaust gas emitted from the internal combustion engine, **characterized by** comprising:

differential pressure detecting means (115) for detecting a filter differential pressure that is a difference in pressure, obtained by subtracting a pressure downstream of the filter from a pressure upstream of the filter;
deposition amount estimating means (116) for estimating an amount of deposition of particulate matter trapped in the filter on the basis of the filter differential pressure;
excessive deposition determination means (118) for determining that the amount of deposition of particulate matter trapped in the filter is abnormal when the amount of deposition of particulate matter, estimated by the deposition amount estimating means, is larger than or equal to a preset excessive deposition determination value;
abnormality processing means (119) for announcing an alarm and stopping injection of fuel from adding injectors when the excessive deposition determination means determines the amount of deposition is abnormal;
vaporization determination means (113) for determining whether moisture absorbed in the filter has vaporized;
prohibiting means (114) for prohibiting the deposition amount estimating means from estimating the amount of deposition of particulate matter when the vaporization determination means determines that moisture absorbed in the filter has not vaporized yet; and
emission amount accumulation means (117) for calculating an amount of emission of particulate matter from the internal combustion engine and calculating an accumulated amount of emission by accumulating the calculated amount of emission, wherein
when the prohibiting means prohibits the deposition amount estimating means from estimating the amount of deposition of particulate matter, the excessive deposition determination means determines whether the amount of deposition of particulate matter trapped in the filter is abnormal on the basis of the accumulated amount of emission, calculated by the emission amount accumulation means.

2. The exhaust gas control system according to claim 1, further comprising:

temperature recognition means (111) for recognizing a temperature of exhaust gas flowing into the filter, wherein
the vaporization determination means determines whether moisture absorbed in the filter has vaporized on the basis of the temperature of exhaust gas, recognized by the temperature recognition means.

3. The exhaust gas control system according to claim 2, further comprising:

a temperature sensor (36) that detects a temperature of exhaust gas flowing into the filter, wherein
the temperature recognition means recognizes the temperature of exhaust gas flowing into the filter on the basis of the temperature of exhaust gas, detected by the temperature sensor.

**4.** The exhaust gas control system according to claim 2 or 3, further comprising:

> period calculation means (112) for calculating a period during which the temperature of exhaust gas, recognized by the temperature recognition means, is higher than or equal to a preset determination temperature, wherein
> the vaporization determination means determines that moisture absorbed in the filter has vaporized when the period calculated by the period calculation means is longer than or equal to a preset determination period.

**5.** The exhaust gas control system according to claim 1, further comprising:

> flow rate recognition means (121) for recognizing a flow rate of exhaust gas flowing into the filter, wherein
> the vaporization determination means determines whether moisture absorbed in the filter has vaporized on the basis of the flow rate of exhaust gas, recognized by the flow rate recognition means.

**6.** The exhaust gas control system according to claim 5, further comprising:

> a flow rate sensor (38) that detects a flow rate of exhaust gas flowing into the filter, wherein
> the flow rate recognition means recognizes the flow rate of exhaust gas flowing into the filter on the basis of the flow rate of exhaust gas, detected by the flow rate sensor.

**7.** The exhaust gas control system according to claim 5 or 6, further comprising:

> period calculation means (112) for calculating a period during which the flow rate of exhaust gas, recognized by the flow rate recognition means, is higher than or equal to a preset determination flow rate, wherein
> the vaporization determination means determines that moisture absorbed in the filter has vaporized when the period calculated by the period calculation means is longer than or equal to a preset determination period.

**8.** The exhaust gas control system according to claim 1, further comprising:

> temperature recognition means (111) for recognizing a temperature of exhaust gas flowing into the filter; and
> flow rate recognition means (121) for recognizing a flow rate of exhaust gas flowing into the filter, wherein
> the vaporization determination means determines whether moisture absorbed in the filter has vaporized on the basis of the temperature of exhaust gas, recognized by the temperature recognition means, and the flow rate of exhaust gas, recognized by the flow rate recognition means.

**9.** The exhaust gas control system according to claim 8, further comprising:

> period setting means (132) for setting a determination period that is a period by which it is determined whether moisture absorbed in the filter has vaporized on the basis of the temperature of exhaust gas, recognized by the temperature recognition means, and the flow rate of exhaust gas, recognized by the flow rate recognition means, wherein
> the vaporization determination means determines that moisture absorbed in the filter has vaporized when the determination period set by the period setting means has elapsed.

**10.** An exhaust gas control method for an internal combustion engine that includes a filter that traps particulate matter contained in exhaust gas emitted from the internal combustion engine, **characterized by** comprising:

> a differential pressure detecting step of detecting a filter differential pressure that is a difference in pressure, obtained by subtracting a pressure downstream of the filter from a pressure upstream of the filter;
> a deposition amount estimating step of estimating an amount of deposition of particulate matter trapped in the filter on the basis of the filter differential pressure;
> an excessive deposition determination step of determining that the amount of deposition of particulate matter trapped in the filter is abnormal when the amount of deposition of particulate matter, estimated in the deposition amount estimating step, is larger than or equal to a preset excessive deposition determination value;
> an abnormality processing step of announcing an alarm and stopping injection of fuel from adding injectors when the excessive deposition determination step determines the amount of deposition is abnormal;
> a vaporization determination step of determining whether moisture absorbed in the filter has vaporized;
> a prohibiting step of prohibiting the deposition amount estimating step from estimating the amount of deposition of particulate matter when it is determined in the vaporization determination step that moisture absorbed in the filter has not vaporized yet; and

an emission amount accumulation step of calculating an amount of emission of particulate matter from the internal combustion engine and calculating an accumulated amount of emission, obtained by accumulating the calculated amount of emission, wherein

when the deposition amount estimating step is prohibited from estimating the amount of deposition of particulate matter in the prohibiting step, it is determined in the excessive deposition determination step whether the amount of deposition of particulate matter trapped in the filter is abnormal on the basis of the accumulated amount of emission, calculated in the emission amount accumulation step.

11. The exhaust gas control method according to claim 10, further comprising:

a temperature recognition step of recognizing a temperature of exhaust gas flowing into the filter, wherein

it is determined in the vaporization determination step whether moisture absorbed in the filter has vaporized on the basis of the temperature of exhaust gas, recognized in the temperature recognition step.

12. The exhaust gas control method according to claim 11, further comprising:

a period calculation step of calculating a period during which the temperature of exhaust gas, recognized in the temperature recognition step, is higher than or equal to a preset determination temperature, wherein

it is determined in the vaporization determination step that moisture absorbed in the filter has vaporized when the period calculated in the period calculation step is longer than or equal to a preset determination period.

13. The exhaust gas control method according to claim 10, further comprising:

a flow rate recognition step of recognizing a flow rate of exhaust gas flowing into the filter, wherein it is determined in the vaporization determination step whether moisture absorbed in the filter has vaporized on the basis of the flow rate of exhaust gas, recognized in the flow rate recognition step.

14. The exhaust gas control method according to claim 13, further comprising:

a period calculation step of calculating a period during which the flow rate of exhaust gas, recognized in the flow rate recognition step, is higher than or equal to a preset determination flow rate, wherein

it is determined in the vaporization determination step that moisture absorbed in the filter has vaporized when the period calculated in the period calculation step is longer than or equal to a preset determination period.

15. The exhaust gas control method according to claim 10, further comprising:

a temperature recognition step of recognizing a temperature of exhaust gas flowing into the filter; and

a flow rate recognition step of recognizing a flow rate of exhaust gas flowing into the filter, wherein

it is determined in the vaporization determination step whether moisture absorbed in the filter has vaporized on the basis of the temperature of exhaust gas, recognized in the temperature recognition step, and the flow rate of exhaust gas, recognized in the flow rate recognition step.

16. The exhaust gas control method according to claim 15, further comprising:

a period setting step of setting a determination period that is a period by which it is determined whether moisture absorbed in the filter has vaporized on the basis of the temperature of exhaust gas, recognized in the temperature recognition step, and the flow rate of exhaust gas, recognized in the flow rate recognition step, wherein

it is determined in the vaporization determination step that moisture absorbed in the filter has vaporized when the determination period set in the period setting step has elapsed.

**Patentansprüche**

1. Ein Ausstoßgassteuerungssystem für einen Motor mit interner Verbrennung, beinhaltend einen Filter, der eine Partikelmaterie fängt, die in einem Ausstoßgas enthalten ist, das von dem Motor mit interner Verbrennung emittiert wird, **dadurch gekennzeichnet, dass** es aufweist:

ein Differenzialdruckerfassungsmittel (115), um einen Filterdifferenzialdruck zu erfassen, der eine Differenz an Druck ist, die erlangt wird, indem ein Druck stromabwärts des Filters von einem Druck stromaufwärts des Filters subtrahiert wird,

ein Ablagerungsbetragsschätzungsmittel (116), um einen Betrag an Ablagerung an in dem Filter gefangener Partikelmaterie auf der Basis des Filterdifferenzialdrucks zu schätzen,

ein Übermaßablagerungsermittlungsmittel (118), um zu ermitteln, dass der Betrag an Ablagerung an in dem Filter gefangener Partikelmaterie anormal ist, wenn der durch das Ablagerungsbetragsschätzungsmittel geschätzte Betrag an Ablagerung an Partikelmaterie größer als ein vorab eingestellter Übermaßablagerunsermittlungswert ist, oder gleich diesem ist,

ein Anormalitätsverarbeitungsmittel (119), um einen Alarm auszugeben und eine Injektion eines Kraftstoffs von Hinzufügungsinjektoren zu stoppen, wenn das Übermaßablagerungsermittlungsmittel ermittelt, dass der Betrag an Ablagerung anormal ist,

ein Verdampfungsermittlungsmittel (113), um zu ermitteln, ob eine in dem Filter absorbierte Feuchtigkeit verdampft ist,

ein Hinderungsmittel (114), um das Ablagerungsbetragsschätzungsmittel daran zu hindern, den Betrag an Ablagerung an Partikelmaterie zu schätzen, wenn das Verdampfungsermittlungsmittel ermittelt, dass eine in dem Filter absorbierte Feuchtigkeit noch nicht verdampft ist, und

ein Emissionsbetragsakkumulationsmittel (117), um einen Betrag an Emission an Partikelmaterie von dem Motor mit interner Verbrennung zu berechnen, und um einen akkumulierten Betrag an Emission zu berechnen, indem der kalkulierte Betrag an Emission akkumuliert wird, wobei

dann, wenn das Hinderungsmittel das Ablagerungsbetragsschätzungsmittel daran hindert, den Betrag an Ablagerung an Partikelmaterie zu schätzen, das Übermaßablagerungsermittlungsmittel auf der Basis des durch das Emissionsbetragsakkumulationsmittel berechneten akkumulierten Betrags an Emission ermittelt, ob der Betrag an Ablagerung an in dem Filter gefangener Partikelmaterie anormal ist.

2. Das Ausstoßgassteuerungssystem gemäß dem Anspruch 1, ferner aufweisend:

ein Temperaturerkennungsmittel (111), um eine Temperatur eines in den Filter strömenden Ausstoßgases zu erkennen, wobei das Verdampfungsermittlungsmittel auf der Basis der durch das Temperaturerkennungsmittel erkannten Temperatur des Ausstoßgases ermittelt, ob eine in dem Filter absorbierte Feuchtigkeit verdampft ist.

3. Das Ausstoßgassteuerungssystem gemäß dem Anspruch 2, ferner aufweisend:

einen Temperatursensor (36), der eine Temperatur eines in den Filter strömenden Ausstoßgases erfasst, wobei das Temperaturerkennungsmittel die Temperatur des in den Filter strömenden Ausstoßgases auf der Basis der durch den Temperatursensor erfassten Temperatur des Ausstoßgases erkennt.

4. Das Ausstoßgassteuerungssystem gemäß dem Anspruch 2 oder 3, ferner aufweisend:

ein Periodenberechnungsmittel (112), um eine Periode zu berechnen, während welcher die durch das Temperaturerkennungsmittel erkannte Temperatur des Ausstoßgases höher als eine vorab eingestellte Ermittlungstemperatur ist, oder gleich dieser ist, wobei das Verdampfungsermittlungsmittel ermittelt, dass eine in dem Filter absorbierte Feuchtigkeit verdampft ist, wenn die durch das Periodenberechnungsmittel berechnete Periode länger als eine vorab eingestellte Ermittlungsperiode ist, oder gleich dieser ist.

5. Das Ausstoßgassteuerungssystem gemäß dem Anspruch 1, ferner aufweisend:

ein Strömungsratenerkennungsmittel (121), um eine Strömungsrate eines in den Filter strömenden Ausstoßgases zu erkennen, wobei das Verdampfungsermittlungsmittel auf der Basis der durch das Strömungsratenerkennungsmittel erkannten Strömungsrate des Ausstoßgases ermittelt, ob eine in dem Filter absorbierte Feuchtigkeit verdampft ist.

6. Das Ausstoßgassteuerungssystem gemäß dem Anspruch 5, ferner aufweisend:

einen Strömungsratensensor (38), der eine Strömungsrate eines in den Filter strömenden Ausstoßgases erfasst, wobei das Strömungsratenerkennungsmittel die Strömungsrate des in den Filter strömenden Ausstoßgases auf der Basis der durch den Strömungsratensensor erfassten Strömungsrate des Ausstoßgases erkennt.

7. Das Ausstoßgassteuerungssystem gemäß dem Anspruch 5 oder 6, ferner aufweisend:

ein Periodenberechnungsmittel (112), um eine Periode zu berechnen, während welcher die durch das Strömungsratenerkennungsmittel erkannte Strömungsrate des Ausstoßgases höher als eine vorab eingestellte Ermittlungsströmungsrate ist, oder gleich dieser ist, wobei das Verdampfungsermittlungsmittel ermittelt, dass eine in dem Filter absorbierte Feuchtigkeit verdampft ist, wenn die durch das Periodenberechnungsmittel berechnete Periode länger als eine vorab eingestellte Ermittlungsperiode ist, oder gleich dieser ist.

8. Das Ausstoßgassteuerungssystem gemäß dem Anspruch 1, ferner aufweisend:

ein Temperaturerkennungsmittel (111), um eine Temperatur des in den Filter strömenden Ausstoßgases zu erkennen, und ein Strömungsratenerkennungsmittel (121), um eine Strömungsrate des in den Filter strömenden Ausstoßgases zu erkennen, wobei das Verdampfungsermittlungsmittel auf der Basis der durch das Temperaturerkennungsmittel erkannten Temperatur des Ausstoßgases und der durch das Strömungsratenerkennungsmittel erkannten Strömungsrate des Ausstoßgases ermittelt, ob eine in dem Filter absorbierte Feuchtigkeit verdampft ist.

9. Das Ausstoßgassteuerungssystem gemäß dem Anspruch 8, ferner aufweisend:

ein Periodeneinstellmittel (132), um auf der Basis der durch das Temperaturerkennungsmittel erkannten Temperatur des Ausstoßgases und der durch das Strömungsratenerkennungsmittel erkannten Strömungsrate des Ausstoßgases eine Ermittlungsperiode einzustellen, welche eine Periode ist, durch welche es ermittelt wird, ob eine in dem Filter absorbierte Feuchtigkeit verdampft ist, wobei das Verdampfungsermittlungsmittel ermittelt, dass eine in dem Filter absorbierte Feuchtigkeit verdampft ist, wenn die durch das Periodeneinstellmittel eingestellte Ermittlungsperiode verstrichen ist.

10. Ein Ausstoßgassteuerungsverfahren für einen Motor mit interner Verbrennung, beinhaltend einen Filter, der eine Partikelmaterie fängt, die in einem Ausstoßgas enthalten ist, das von dem Motor mit interner Verbrennung emittiert wird, **dadurch gekennzeichnet, dass** es aufweist:

einen Differenzialdruckerfassungsschritt, wobei ein Filterdifferenzialdruck erfasst wird, der eine Differenz an Druck ist, die erlangt wird, indem ein Druck stromabwärts des Filters von einem Druck stromaufwärts des Filters subtrahiert wird, einen Ablagerungsbetragsschätzungsschritt,

wobei ein Betrag an Ablagerung an in dem Filter gefangener Partikelmaterie auf der Basis des Filterdifferenzialdrucks geschätzt wird, einen Übermaßablagerungsermittlungsschritt, wobei ermittelt wird, dass der Betrag an Ablagerung an in dem Filter gefangener Partikelmaterie anormal ist, wenn der in dem Ablagerungsbetragsschätzungsschritt geschätzte Betrag an Ablagerung an Partikelmaterie größer als ein vorab eingestellter Übermaßablagerungsermittlungswert ist, oder gleich diesem ist, einen Anormalitätsverarbeitungsschritt, wobei ein Alarm ausgegeben wird, und eine Injektion eines Kraftstoffs von Hinzufügungsinjektoren gestoppt wird, wenn der Übermaßablagerungsermittlungsschritt ermittelt, dass der Betrag an Ablagerung anormal ist, einen Verdampfungsermittlungsschritt, wobei ermittelt wird, ob eine in dem Filter absorbierte Feuchtigkeit verdampft ist, einen Hinderungsschritt, wobei der Ablagerungsbetragsschätzungsschritt daran gehindert wird, den Betrag an Ablagerung an Partikelmaterie zu schätzen, wenn in dem Verdampfungsermittlungsschritt ermittelt wird, dass eine in dem Filter abgelagerte Feuchtigkeit noch nicht verdampft ist, und einen Emissionsbetragsakkumulationsschritt, wobei ein Betrag an Emission der Partikelmaterie von dem Motor mit interner Verbrennung berechnet wird, und wobei ein akkumulierter Betrag an Emission berechnet wird, der erlangt wird, indem der berechnete Betrag an Emission akkumuliert wird, wobei dann, wenn der Ablagerungsbetragsschätzungsschritt in dem Hinderungsschritt daran gehindert wird, den Betrag an Ablagerung an Partikelmaterie zu schätzen, in dem Übermaßablagerungsermittlungsschritt auf der Basis des in dem Emissionsbetragsakkumulationsschritt berechneten akkumulierten Betrags an Emission ermittelt wird, ob der Betrag an Ablagerung an in dem Filter gefangener Partikelmaterie anormal ist.

11. Das Ausstoßgassteuerungsverfahren gemäß dem Anspruch 10, ferner aufweisend:

einen Temperaturerkennungsschritt, wobei eine Temperatur eines in den Filter strömenden Ausstoßgases erkannt wird, wobei in dem Verdampfungsermittlungsschritt auf der Basis der in dem Temperaturerkennungsschritt erkannten Temperatur des Ausstoßgases ermittelt wird, ob eine in dem Filter absorbierte Feuchtigkeit verdampft ist.

12. Das Ausstoßgassteuerungsverfahren gemäß dem Anspruch 11, ferner aufweisend:

einen Periodenberechnungsschritt, wobei eine Periode berechnet wird, während welcher die in dem Temperaturerkennungsschritt erkannte Temperatur des Ausstoßgases höher als eine vorab eingestellte Ermittlungstemperatur ist, oder gleich dieser ist, wobei
in dem Verdampfungsermittlungsschritt ermittelt wird, dass eine in dem Filter absorbierte Feuchtigkeit verdampft ist, wenn die in dem Periodenberechnungsschritt berechnete Periode länger als eine vorab eingestellte Ermittlungsperiode ist, oder gleich dieser ist.

13. Das Ausstoßgassteuerungsverfahren gemäß dem Anspruch 10, ferner aufweisend:

einen Strömungsratenerkennungsschritt, wobei eine Strömungsrate eines in den Filter strömenden Ausstoßgases erkannt wird, wobei
in dem Verdampfungsermittlungsschritt auf der Basis der in dem Strömungsratenerkennungsschritt erkannten Strömungsrate des Ausstoßgases ermittelt wird, ob eine in dem Filter absorbierte Feuchtigkeit verdampft ist.

14. Das Ausstoßgassteuerungsverfahren gemäß dem Anspruch 13, ferner aufweisend:

einen Periodenberechnungsschritt, wobei eine Periode berechnet wird, während welcher die in dem Strömungsratenerkennungsschritt erkannte Strömungsrate des Ausstoßgases höher als eine vorab eingestellte Ermittlungsströmungsrate ist, oder gleich dieser ist, wobei
in dem Verdampfungsermittlungsschritt ermittelt wird, dass eine in dem Filter absorbierte Feuchtigkeit verdampft ist, wenn die in dem Periodenberechnungsschritt berechnete Periode länger als eine vorab eingestellte Ermittlungsperiode ist, oder gleich dieser ist.

15. Das Ausstoßgassteuerungsverfahren gemäß dem Anspruch 10, ferner aufweisend:

einen Temperaturerkennungsschritt, wobei eine Temperatur eines in den Filter strömenden Ausstoßgases erkannt wird, und
einen Strömungsratenerkennungsschritt, wobei eine Strömungsrate eines in den Filter strömenden Ausstoßgases erkannt wird, wobei
es in dem Verdampfungsermittlungsschritt auf der Basis der in dem Temperaturerkennungsschritt erkannten Temperatur des Ausstoßgases und der in dem Strömungsratenerkennungsschritt erkannten Strömungsrate des Ausstoßgases ermittelt wird, ob eine in dem Filter absorbierte Feuchtigkeit verdampft ist.

16. Das Ausstoßgassteuerungsverfahren gemäß dem Anspruch 15, ferner aufweisend:

ein Periodeneinstellungsschritt, wobei auf der Basis der in dem Temperaturerkennungsschritt erkannten Temperatur des Ausstoßgases und der in dem Strömungsratenerkennungsschritt erkannten Strömungsrate des Ausstoßgases eine Ermittlungsperiode eingestellt wird, welche eine Periode ist, durch welche es ermittelt wird, ob eine in dem Filter absorbierte Feuchtigkeit verdampft ist, wobei
in dem Verdampfungsermittlungsschritt ermittelt wird, dass eine in dem Filter absorbierte Feuchtigkeit verdampft ist, wenn die in dem Periodeneinstellungsschritt eingestellte Ermittlungsperiode verstrichen ist.

## Revendications

1. Système de contrôle de gaz d'échappement pour un moteur à combustion interne qui comprend un filtre qui piège de la matière particulaire contenue dans des gaz d'échappement émis à partir du moteur à combustion interne, **caractérisé en ce qu'**il comprend :

un moyen de détection de pression préférentielle (115) pour détecter une pression différentielle de filtre qui est une différence de pression, obtenue par soustraction d'une pression en aval du filtre d'une pression en amont du filtre ;
un moyen d'estimation de quantité de dépôt (116) pour estimer une quantité de dépôt de matière particulaire piégée dans le filtre sur la base de la pression différentielle de filtre ;
un moyen de détermination de dépôt excessif (118) pour déterminer que la quantité de dépôt de matière particulaire piégée dans le filtre est anormale lorsque la quantité de dépôt de matière particulaire, estimée par le moyen d'estimation de quantité de dépôt, est supérieure ou égale à une valeur de détermination de dépôt excessif prédéterminée ;
un moyen de traitement d'anomalie (119) pour annoncer une alarme et arrêter l'injection de carburant à partir d'injecteurs d'addition lorsque le moyen de détermination de dépôt excessif détermine que la quantité de dépôt est anormale ;
un moyen de détermination de vaporisation (113) pour déterminer si de l'humidité absorbée dans le filtre a été vaporisée
un moyen d'interdiction (114) pour interdire au moyen d'estimation de quantité de dépôt d'estimer la quantité de dépôt de matière particulaire lorsque le moyen de détermination de vaporisation détermine que de l'humidité absorbée dans le filtre n'a pas été encore vaporisée ; et

un moyen d'accumulation de quantité d'émission (117) pour calculer une quantité d'émission de matière particulaire à partir du moteur à combustion interne et calculer une quantité accumulée d'émission en accumulant la quantité calculée d'émission, dans lequel

lorsque le moyen d'interdiction interdit au moyen d'estimation de quantité de dépôt d'estimer la quantité de dépôt de matière particulaire, le moyen de détermination de dépôt excessif détermine si la quantité de dépôt de matière particulaire piégée dans le filtre est anormale sur la base de la quantité accumulée d'émission, calculée par le moyen d'accumulation de quantité d'émission.

2. Système de contrôle de gaz d'échappement selon la revendication 1, comprenant de plus :

un moyen de reconnaissance de température (111) pour reconnaître une température de gaz d'échappement s'écoulant dans le filtre, dans lequel,

le moyen de détermination de vaporisation détermine si de l'humidité absorbée dans le filtre a été vaporisée sur la base de la température de gaz d'échappement, reconnue par le moyen de reconnaissance de température.

3. Système de contrôle de gaz d'échappement selon la revendication 2, comprenant de plus :

un détecteur de température (36) qui détecte une température de gaz d'échappement s'écoulant dans le filtre, dans lequel

le moyen de reconnaissance de température reconnaît la température de gaz d'échappement s'écoulant dans le filtre sur la base de la température de gaz d'échappement, détectée par le détecteur de température.

4. Système de contrôle de gaz d'échappement selon la revendication 2 ou 3, comprenant de plus :

un moyen de calcul de période (112) pour calculer une période pendant laquelle la température de gaz d'échappement, reconnue par le moyen de reconnaissance de température, est supérieure ou égale à une température de détermination prédéterminée, dans lequel

le moyen de détermination de vaporisation détermine que de l'humidité absorbée dans le filtre a été vaporisée lorsque la période calculée par le moyen de calcul de période est supérieure ou égale à une période de détermination prédéterminée.

5. Système de contrôle de gaz d'échappement selon la revendication 1, comprenant de plus :

un moyen de reconnaissance de débit (121) pour reconnaître un débit de gaz d'échappement s'écoulant dans le filtre, dans lequel

le moyen de détermination de vaporisation détermine si de l'humidité absorbée dans le filtre a été vaporisée sur la base du débit de gaz d'échappement, reconnu par le moyen de reconnaissance de débit.

6. Système de contrôle de gaz d'échappement selon la revendication 5, comprenant de plus :

un détecteur de débit (38) qui détecte un débit de gaz d'échappement s'écoulant dans le filtre, dans lequel

le moyen de reconnaissance de débit reconnaît le débit de gaz d'échappement s'écoulant dans le filtre sur la base du débit de gaz d'échappement, détecté par le détecteur de débit.

7. Système de contrôle de gaz d'échappement selon la revendication 5 ou 6, comprenant de plus :

un moyen de calcul de période (112) pour calculer une période pendant laquelle le débit de gaz d'échappement, reconnu par le moyen de reconnaissance de débit, est supérieur ou égal à un débit de détermination prédéterminé, dans lequel

le moyen de détermination de vaporisation détermine que de l'humidité absorbée dans le filtre a été vaporisée lorsque la période calculée par le moyen de calcul de période est supérieure ou égale à une période de détermination préfixée.

8. Système de contrôle de gaz d'échappement selon la revendication 1, comprenant de plus :

un moyen de reconnaissance de température (111) pour reconnaître une température de gaz d'échappement s'écoulant dans le filtre ; et

un moyen de reconnaissance de débit (121) pour reconnaître un débit de gaz d'échappement s'écoulant dans le filtre, dans lequel

le moyen de détermination de vaporisation détermine si de l'humidité absorbée dans le filtre a été vaporisée sur la base de la température de gaz d'échappement, reconnue par le moyen de reconnaissance de température, et du débit de gaz d'échappement, reconnu par le moyen de reconnaissance de débit.

9. Système de contrôle de gaz d'échappement selon la revendication 8, comprenant de plus :

un moyen de fixation de période (132) pour fixer une période de détermination qui est une période par laquelle il est déterminé si de l'humidité absorbée dans le filtre a été vaporisée sur la base de la température de gaz d'échappement, reconnue par le moyen de reconnaissance de température, et du débit de gaz d'échappement, reconnu par le moyen de reconnaissance de débit, dans lequel

le moyen de détermination de vaporisation détermine que de l'humidité absorbée dans le filtre a été vaporisée lorsque la période de détermination fixée par le moyen de fixation de période s'est écoulée.

10. Procédé de contrôle de gaz d'échappement pour un moteur à combustion interne qui comprend un filtre qui piège de la matière particulaire contenue dans des gaz d'échappement émis à partir du moteur à combustion interne, **caractérisé en ce qu'**il comprend :

une étape de détection de pression préférentielle détectant une pression différentielle de filtre qui est une différence de pression, obtenue par soustraction d'une pression en aval du filtre d'une pression en amont du filtre ;

une étape d'estimation de quantité de dépôt estimant une quantité de dépôt de matière particulaire piégée dans le filtre sur la base de la pression différentielle de filtre ;

une étape de détermination de dépôt excessif déterminant que la quantité de dépôt de matière particulaire piégée dans le filtre est anormale lorsque la quantité de dépôt de matière particulaire, estimée dans l'étape d'estimation de quantité de dépôt, est supérieure ou égale à une valeur de détermination de dépôt excessif préfixée ;

une étape de traitement d'anomalie annonçant une alarme et arrêtant l'injection de carburant à partir d'injecteurs d'addition lorsque l'étape de détermination de dépôt excessif détermine que la quantité de dépôt est anormale ;

une étape de détermination de vaporisation déterminant si de l'humidité absorbée dans le filtre a été vaporisée ;

une étape d'interdiction interdisant à l'étape d'estimation de quantité de dépôt d'estimer la quantité de dépôt de matière particulaire lorsqu'il est déterminé dans l'étape de détermination de vaporisation que de l'humidité absorbée dans le filtre n'a pas encore été vaporisée ; et

une étape d'accumulation de quantité d'émission calculant une quantité d'émission de matière particulaire à partir du moteur à combustion interne et calculant une quantité accumulée d'émission, obtenue en accumulant la quantité calculée d'émission, dans lequel

lorsque l'étape d'estimation de quantité de dépôt est interdite d'estimer la quantité de dépôt de matière particulaire dans l'étape d'interdiction, il est déterminé dans l'étape de détermination de dépôt excessif si la quantité de dépôt de matière particulaire piégée dans le filtre est anormale sur la base de la quantité accumulée d'émission, calculée dans l'étape d'accumulation de quantité d'émission.

11. Procédé de contrôle de gaz d'échappement selon la revendication 10, comprenant de plus :

une étape de reconnaissance de température reconnaissant une température de gaz d'échappement s'écoulant dans le filtre, dans lequel il est déterminé dans l'étape de détermination de vaporisation si de l'humidité absorbée dans le filtre a été vaporisée sur la base de la température de gaz d'échappement, reconnue dans l'étape de reconnaissance de température.

12. Procédé de contrôle de gaz d'échappement selon la revendication 11, comprenant de plus :

une étape de calcul de période calculant une période pendant laquelle la température de gaz d'échappement, reconnue dans l'étape de reconnaissance de température, est supérieure ou égale à une température de détermination préfixée, dans lequel

il est déterminé dans l'étape de détermination de vaporisation que de l'humidité absorbée dans le filtre a été vaporisée lorsque la période calculée dans l'étape de calcul de période est supérieure ou égale à une période de détermination préfixée.

13. Procédé de contrôle de gaz d'échappement selon la revendication 10, comprenant de plus :

une étape de reconnaissance de débit reconnaissant un débit de gaz d'échappement s'écoulant dans le filtre, dans lequel il est déterminé dans l'étape de détermination de vaporisation si de l'humidité absorbée dans le filtre a été vaporisée sur la base du débit de gaz d'échappement, reconnu dans l'étape de reconnaissance de débit.

14. Procédé de contrôle de gaz d'échappement selon la revendication 13, comprenant de plus :

une étape de calcul de période calculant une période pendant laquelle le débit de gaz d'échappement, reconnu dans l'étape de reconnaissance de débit, est supérieur ou égal à un débit de détermination préfixé, dans lequel

il est déterminé dans l'étape de détermination de vaporisation que de l'humidité absorbée dans le filtre a été vaporisée lorsque la période calculée dans l'étape de calcul de période est supérieure ou égale à une période de détermination préfixée.

15. Procédé de contrôle de gaz d'échappement selon la revendication 10, comprenant de plus :

une étape de reconnaissance de température reconnaissant une température de gaz d'échappement s'écoulant dans le filtre ; et
une étape de reconnaissance de débit reconnaissant un débit de gaz d'échappement s'écoulant dans le filtre, dans lequel
il est déterminé dans l'étape de détermination de vaporisation si de l'humidité absorbée dans le filtre a été vaporisée sur la base de la température de gaz d'échappement, reconnue dans l'étape de reconnaissance de température, et du débit de gaz d'échappement reconnu dans l'étape de reconnaissance de débit.

16. Procédé de contrôle de gaz d'échappement selon la revendication 15, comprenant de plus :

une étape de fixation de période fixant une période de détermination qui est une période par laquelle il est déterminé si de l'humidité absorbée dans le filtre a été vaporisée sur la base de la température de gaz d'échappement, reconnue dans l'étape de reconnaissance de température, et du débit de gaz d'échappement, reconnu dans l'étape de reconnaissance de débit, dans lequel
il est déterminé dans l'étape de détermination de vaporisation que de l'humidité absorbée dans le filtre a été vaporisée lorsque la période de détermination fixée dans l'étape de fixation de période s'est écoulée.

# F I G . 1

# F I G . 2

31 — ENGINE ROTATION SPEED SENSOR

32 — COOLANT TEMPERATURE SENSOR

33 — AIR FLOW METER

34 — INTAKE AIR TEMPERATURE SENSOR

35 — INTAKE AIR PRESSURE SENSOR

36 — FIRST EXHAUST TEMPERATURE SENSOR

37 — SECOND EXHAUST TEMPERATURE SENSOR

38 — EXHAUST FLOW RATE SENSOR

39 — DIFFERENTIAL PRESSURE SENSOR

40 — RAIL PRESSURE SENSOR

41 — THROTTLE OPENING DEGREE SENSOR

42 — ACCELERATOR OPERATION AMOUNT SENSOR

43 — VEHICLE SPEED SENSOR

2 — ADDING INJECTORS

10 — SUPPLY PUMP

51 — THROTTLE MOTOR

64 — VARIABLE NOZZLE VANE MECHANISM

72 — EGR VALVE

105 INPUT INTERFACE

106 OUTPUT INTERFACE

100(100A,100B)

BACKUP RAM — 104

RAM — 103

ROM — 102

CPU — 101

107

# FIG.3

# FIG.4A

EXHAUST GAS TEMPERATURE TE

DETERMINATION TEMPERATURE TE0

G1

P11

P12

0 T11 T12 T13 T14 TIME T

# FIG.4B

EXHAUST GAS FLOW RATE FE

DETERMINATION FLOW RATE FE0

G2

P21

P22

0 T21 T22 T23 T24 TIME T

# F I G . 5

# F I G . 6

```
                    ┌─────────┐
                    │  START  │
                    └─────────┘
                         │
                                        S101
      YES ╱ HAS PERIOD P0 ELAPSED ╲
      ┌───┤  AFTER ENGINE START ?  │
      │    ╲                      ╱
      │              │ NO      S103
      │    ┌──────────────────────┐
      │    │  ACQUIRE EXHAUST GAS  │
      │    │   TEMPERATURE TE      │
      │    └──────────────────────┘
      │              │         S105
      │    ┌──────────────────────┐
      │    │ CALCULATE CONTINUOUS  │
      │    │     PERIOD PT         │
      │    └──────────────────────┘
      │              │         S107
      │    ╱ IS PT LONGER THAN ╲
      │   │  OR EQUAL TO        │ NO
      │   │  DETERMINATION      ├────────┐
      │    ╲ PERIOD PA ?       ╱         │
      │          │ YES    S109           │ S113
      │   ┌──────────────────┐  ┌──────────────────────┐
      │   │ DETECT DIFFERENTIAL│  │    CALCULATE         │
      │   │ PRESSURE ΔPA      │  │ ACCUMULATED AMOUNT   │
      │   └──────────────────┘  │   OF EMISSION QE     │
      │          │        S111   └──────────────────────┘
      │   ┌──────────────────┐         │          S115
      │   │ ESTIMATE AMOUNT OF│  ┌──────────────────────┐
      │   │  DEPOSITION QP    │  │  ESTIMATE AMOUNT OF   │
      │   └──────────────────┘  │   DEPOSITION QP       │
      │          │              └──────────────────────┘
      │          │◄─────────────────────┘
      │          │          S117
      │    ╱ IS AMOUNT OF  ╲
      │NO │ DEPOSITION QP    │
      └───┤ LARGER THAN OR   │
           ╲ EQUAL TO QPth ?╱
                 │ YES    S119
          ┌──────────────────────┐
          │ DETERMINE THAT AMOUNT │
          │ OF DEPOSITION QP IS   │
          │      EXCESSIVE        │
          └──────────────────────┘
                 │
             ┌─────────┐
             │   END   │
             └─────────┘
```

# FIG.7

# FIG.8

START

S201

HAS PERIOD P0 ELAPSED AFTER ENGINE START ?
— YES

NO

S203

ACQUIRE EXHAUST GAS FLOW RATE FE

S205

CALCULATE CONTINUOUS PERIOD PF

S207

IS PF LONGER THAN OR EQUAL TO DETERMINATION PERIOD PB ?
NO →

YES

S209

DETECT DIFFERENTIAL PRESSURE ΔPA

S211

ESTIMATE AMOUNT OF DEPOSITION QP

S213

CALCULATE ACCUMULATED AMOUNT OF EMISSION QE

S215

ESTIMATE AMOUNT OF DEPOSITION QP

S217

IS AMOUNT OF DEPOSITION QP LARGER THAN OR EQUAL TO QPth ?
NO

YES

S219

DETERMINE THAT AMOUNT OF DEPOSITION QP IS EXCESSIVE

END

# FIG.9

# FIG. 10

START

S301

HAS PERIOD P0 ELAPSED AFTER ENGINE START ? — YES

NO

DETECT EXHAUST GAS TEMPERATURE TE — S302

ACQUIRE EXHAUST GAS FLOW RATE FE — S303

CALCULATE DETERMINATION PERIOD PC — S305

S307

IS PT LONGER THAN OR EQUAL TO DETERMINATION PERIOD PC ? — NO

YES

S309

DETECT DIFFERENTIAL PRESSURE ΔPA

S313

CALCULATE ACCUMULATED AMOUNT OF EMISSION QE

S311

ESTIMATE AMOUNT OF DEPOSITION QP

S315

ESTIMATE AMOUNT OF DEPOSITION QP

S317

IS AMOUNT OF DEPOSITION QP LARGER THAN OR EQUAL TO QPth ? — NO

YES

DETERMINE THAT AMOUNT OF DEPOSITION QP IS EXCESSIVE — S319

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004197722 A
- EP 1854971 A1
- GB 2456060 A
- JP 2010196498 A